# EUROPEAN PATENT APPLICATION

(11) **EP 2 421 082 A1**
(43) Date of publication of application: **22.02.2012**
(21) Application number: 10764339.7
(22) Date of filing: 17.03.2010
(51) Int. Cl.: H01M 10/0585, H01M 4/66, H01M 10/052, H01M 10/0562

(54) **METHOD FOR MANUFACTURING SOLID ELECTROLYTIC CELL, AND SOLID ELECTROLYTIC CELL**

(30) Priority: 15.04.2009 JP 2009099138
(71) Applicant: Sony Corporation, Tokyo 108-0075 (JP)
(72) Inventor: FURUYA, Tatsuya, Tokyo 108-0075 (JP)
(74) Representative: Müller - Hoffmann & Partner
(86) International application number: PCT/JP2010/055152
(87) International publication number: WO 2010/119754

(57) **Abstract**

There are provided a method for manufacturing a solid electrolyte battery and a solid electrolyte battery, each of which can reduce the number of films and can obtain excellent performance. This method for manufacturing a solid electrolyte battery has a laminate formation step of forming a laminate in which a lower collector layer 12, an interlayer 13, and an upper collector layer 14 are laminated in this order on a substrate 11 and a step of applying a voltage to the laminate.

## Description

### Technical Field

The present invention relates to a method for manufacturing a solid electrolyte battery and a solid electrolyte battery.

### Background Art

Because of remarkable development of portable electronic technology in recent years, portable electronic apparatuses, such as cellular phones and notebook type personal computers, have been recognized as fundamental technology supporting a high information society. Furthermore, research and development on highly advanced performance of these apparatuses have been energetically pursued, and in proportion to this trend, power consumption of the portable electronic apparatuses has been continuously increased. On the other hand, these electronic apparatuses are required to be driven for a long period of time, and inevitably, an increase in energy density of a secondary battery used as a drive power supply has been desired.

A higher energy density of the battery is more preferable in view, for example, of the volume and weight occupied by the battery which is embedded in the portable electronic apparatus. Since having an excellent energy density, lithium ion secondary batteries using doping and dedoping of lithium ions have been widely used for the portable electronic apparatuses.

Among the lithium ion secondary batteries, since a thin film lithium ion secondary battery, which is formed using a thin-film technique, can realize further reduction in size and weight, this battery has been expected as a power source for an IC card and a small electronic apparatus.

For example, a thin film lithium ion secondary battery disclosed in Domestic Re-publication of PCT International Publication for Patent Application No. 2006/082846 has a structure in which on a substrate, a positive electrode-side collector layer, a positive electrode active material layer, a solid electrolyte layer, a negative electrode active material layer, and a negative electrode-side collector layer are laminated. In this thin film lithium ion secondary battery, every layer (thin film) is formed by a sputtering method.

### Summary of Invention

### Technical Problem

However, in the conventional thin film lithium ion secondary battery (hereinafter, referred to as "conventional thin film battery) disclosed in Domestic Re-publication of PCT International Publication for Patent Application No. 2006/082846, there have been the following problems (1) to (5).
(1) In the conventional thin film battery, the collector layer, the positive electrode active material layer, the solid electrolyte layer, the negative electrode active material layer, and the collector layer (each of which is a thin film) are formed from respective different materials. Hence, when the conventional thin film battery is formed, for example, by a sputtering method, different target materials corresponding to materials for forming the respective layers must be prepared, and the number of necessary target materials is increased.
(2) In the conventional thin film battery, in order to form the respective layers (respective thin films), sputtering must be performed many times under different conditions, and for example, the target material and the mask must also be exchanged every time; hence, it will take time for manufacturing.
(3) Furthermore, in the conventional thin film battery, since the number of films is many (five layers), peeling and cracking occur due to stresses of the respective films.
(4) Furthermore, in the conventional thin film battery, since the number of films is many (five layers), when the temperature changes, peeling and cracking occur due to the difference in coefficient of thermal expansion between the respective films.
(5) Furthermore, in the conventional thin film battery, since a rare metal (Co and/or Ni) is contained in a material used for the positive electrode and/or the negative electrode, the manufacturing cost is increased.

Therefore, an object of the present invention is to provide a method for manufacturing a solid electrolyte battery and a solid electrolyte battery, each of which is effective against the problems (1) to (5).

### Solution to Problem

In order to achieve the above object, according to a first aspect of the present invention, there is provided a method for manufacturing a solid electrolyte battery which comprises the steps of: forming a laminate having a first collector layer of a first collector material, a second collector layer of a second collector material, and an interlayer of a lithium ion conductive material; and applying a voltage to the laminate.

According to a second aspect of the present invention, there is provided a method for manufacturing a solid electrolyte battery which comprises the steps of: forming a laminate having a substrate, a first collector layer of a first collector material formed on the substrate, an interlayer of a lithium ion conductive material formed on the first collector layer, and a second collector layer of a second collector material formed on the interlayer; and applying a voltage to the laminate.

According to a third aspect of the present invention, there is provided a solid electrolyte battery which comprises: a first collector layer of a first collector material; a second collector layer of a second collector material; and an interlayer of a lithium ion conductive material provided between the first collector layer and the second collector layer, wherein the interlayer has a positive electrode region, a solid electrolyte region, and a negative electrode region, each of which is formed by the change of the lithium ion conductive material, lithium ions move to the negative electrode region from the positive electrode region via the solid electrolyte region at the time of charge, and lithium ions move to the positive electrode region from the negative electrode region via the solid electrolyte region at the time of discharge.

According to a fourth aspect of the present invention, there is provided a solid electrolyte battery which comprises: a substrate; a first collector layer of a first collector material formed on the substrate; an interlayer of a lithium ion conductive material formed on the first collector layer; and a second collector layer of a second collector material formed on the interlayer, wherein the interlayer has a positive electrode region, a solid electrolyte region, and a negative electrode region, each of which is formed by the change of the lithium ion conductive material, lithium ions move to the negative electrode region from the positive electrode region via the solid electrolyte region at the time of charge, and lithium ions move to the positive electrode region from the negative electrode region via the solid electrolyte region at the time of discharge.

According to the first to the fourth aspects of the present invention, since the single interlayer formed of the lithium ion conductive material is changed to form the positive electrode region, the solid electrolyte region, and the negative electrode region, the number of the layers of the solid electrolyte battery can be reduced.

### Advantageous Effects of Invention

According to the present invention, since the single interlayer formed of the lithium ion conductive material is changed to form the positive electrode region, the solid electrolyte region, and the negative electrode region, excellent performance can be obtained.

### Brief Description of Drawings

[Fig. 1] Fig. 1 includes cross-sectional views each illustrating a method for manufacturing a solid electrolyte battery according to a first embodiment of the present invention.
[Fig. 2] Fig. 2 is a schematic view showing the structure of one example of a sputtering apparatus used for the method for manufacturing a solid electrolyte battery according to the first embodiment of the present invention.
[Fig. 3] Fig. 3 includes cross-sectional views each illustrating a method for manufacturing a solid electrolyte battery according to a second embodiment of the present invention.
[Fig. 4] Fig. 4 includes cross-sectional views each illustrating a method for manufacturing a solid electrolyte battery according to a third embodiment of the present invention.
[Fig. 5] Fig. 5 is a graph showing a result of a charge and discharge test of Test Example 1-1.
[Fig. 6] Fig. 6 is a graph showing results of the charge and discharge test of Test Example 1-1.
[Fig. 7] Fig. 7 is a graph showing results of the charge and discharge test of Test Example 1-1.
[Fig. 8] Fig. 8 is a graph showing a measurement result of an open-circuit voltage of Test Example 1-1.
[Fig. 9] Fig. 9 is a Cole-Cole plot showing results of impedance measurement of Test Example 1-1.
[Fig. 10] Fig. 10 is a Cole-Cole plot showing results of the impedance measurement of Test Example 1-1.
[Fig. 11] Fig. 11 is a graph showing a result of a charge and discharge test of Test Example 1-2.
[Fig. 12] Fig. 12 is a graph showing results of the charge and discharge test of Test Example 1-2.
[Fig. 13] Fig. 13 is a graph showing a measurement result of an open-circuit voltage of Test Example 1-2.
[Fig. 14] Fig. 14 is a Cole-Cole plot showing results of impedance measurement of Test Example 1-2.
[Fig. 15] Fig. 15 is a Cole-Cole plot showing results of the impedance measurement of Test Example 1-2.
[Fig. 16] Fig. 16 is a graph showing a result of a charge and discharge test of Test Example 1-3.
[Fig. 17] Fig. 17 is a graph showing results of the charge and discharge test of Test Example 1-3.
[Fig. 18] Fig. 18 is a graph showing results of the charge and discharge test of Test Example 1-3.
[Fig. 19] Fig. 19 is a graph showing a measurement result of an open-circuit voltage of Test Example 1-3.
[Fig. 20] Fig. 20 is a Cole-Cole plot showing results of impedance measurement of Test Example 1-3.
[Fig. 21] Fig. 21 is a Cole-Cole plot showing results of the impedance measurement of Test Example 1-3.
[Fig. 22] Fig. 22 is a graph showing a result of a charge and discharge test of Test Example 1-4.
[Fig. 23] Fig. 23 is a graph showing results of the charge and discharge test of Test Example 1-4.
[Fig. 24] Fig. 24 is a graph showing results of the charge and discharge test of Test Example 1-4.
[Fig. 25] Fig. 25 is a graph showing a measurement result of an open-circuit voltage of Test Example 1-4.
[Fig. 26] Fig. 26 is a Cole-Cole plot showing results of impedance measurement of Test Example 1-4.
[Fig. 27] Fig. 27 is a Cole-Cole plot showing results of the impedance measurement of Test Example 1-4.
[Fig. 28] Fig. 28 is a graph obtained by plotting discharge capacity with respect to the number of cycles of each material of a collector layer.
[Fig. 29] Fig. 29 is a graph obtained by plotting the discharge capacity with respect to the number of cycles of each material of the collector layer.
[Fig. 30] Fig. 30 is a graph obtained by plotting the discharge capacity with respect to the number of cycles of each material of the collector layer.
[Fig. 31] Fig. 31 is a graph obtained by plotting a discharge capacity retention rate with respect to the number of cycles of each material of the collector layer.
[Fig. 32] Fig. 32 is a graph showing a result of a charge and discharge test of Test Example 2-1.
[Fig. 33] Fig. 33 is a graph showing results of the charge and discharge test of Test Example 2-1.
[Fig. 34] Fig. 34 is a graph showing a measurement result of an open-circuit voltage of Test Example 2-1.
[Fig. 35] Fig. 35 is a Cole-Cole plot showing results of impedance measurement of Test Example 2-1.
[Fig. 36] Fig. 36 is a Cole-Cole plot showing results of the impedance measurement of Test Example 2-1.
[Fig. 37] Fig. 37 is a graph showing a result of a charge and discharge test of Test Example 2-2.
[Fig. 38] Fig. 38 is a graph showing results of the charge and discharge test of Test Example 2-2.
[Fig. 39] Fig. 39 is a graph showing a measurement result of an open-circuit voltage of Test Example 2-2.
[Fig. 40] Fig. 40 is a Cole-Cole plot showing results of impedance measurement of Test Example 2-2.
[Fig. 41] Fig. 41 is a Cole-Cole plot showing results of the impedance measurement of Test Example 2-2.
[Fig. 42] Fig. 42 is a graph showing a result of a charge and discharge test of Test Example 2-3.
[Fig. 43] Fig. 43 is a graph showing results of the charge and discharge test of Test Example 2-3.
[Fig. 44] Fig. 44 is a graph showing a measurement result of an open-circuit voltage of Test Example 2-3.
[Fig. 45] Fig. 45 is a Cole-Cole plot showing results of impedance measurement of Test Example 2-3.
[Fig. 46] Fig. 46 is a Cole-Cole plot showing results of the impedance measurement of Test Example 2-3.
[Fig. 47] Fig. 47 is a graph showing a result of a charge and discharge test of Test Example 2-4.
[Fig. 48] Fig. 48 is a graph showing results of the charge and discharge test of Test Example 2-4.
[Fig. 49] Fig. 49 is a graph showing a measurement result of an open-circuit voltage of Test Example 2-4.
[Fig. 50] Fig. 50 is a Cole-Cole plot showing results of impedance measurement of Test Example 2-4.
[Fig. 51] Fig. 51 is a Cole-Cole plot showing results of the impedance measurement of Test Example 2-4.
[Fig. 52] Fig. 52 is a graph showing a result of a charge and discharge test of Test Example 2-5.
[Fig. 53] Fig. 53 is a graph showing results of the charge and discharge test of Test Example 2-5.
[Fig. 54] Fig. 54 is a graph showing a measurement result of an open-circuit voltage of Test Example 2-5.
[Fig. 55] Fig. 55 is a Cole-Cole plot showing results of impedance measurement of Test Example 2-5.
[Fig. 56] Fig. 56 is a Cole-Cole plot showing results of the impedance measurement of Test Example 2-5.
[Fig. 57] Fig. 57 is a graph showing a result of a charge and discharge test of Test Example 2-6.
[Fig. 58] Fig. 58 is a graph showing results of the charge and discharge test of Test Example 2-6.
[Fig. 59] Fig. 59 is a graph showing a measurement result of an open-circuit voltage of Test Example 2-6.
[Fig. 60] Fig. 60 is a Cole-Cole plot showing results of impedance measurement of Test Example 2-6.
[Fig. 61] Fig. 61 is a Cole-Cole plot showing results of the impedance measurement of Test Example 2-6.
[Fig. 62] Fig. 62 is a graph showing a result of a charge and discharge test of Test Example 2-7.
[Fig. 63] Fig. 63 is a graph showing results of the charge and discharge test of Test Example 2-7.
[Fig. 64] Fig. 64 is a graph showing a measurement result of an open-circuit voltage of Test Example 2-7.
[Fig. 65] Fig. 65 is a Cole-Cole plot showing results of impedance measurement of Test Example 2-7.
[Fig. 66] Fig. 66 is a Cole-Cole plot showing results of the impedance measurement of Test Example 2-7.
[Fig. 67] Fig. 67 is a graph obtained by plotting discharge capacity with respect to the number of cycles of each material of a collector layer.
[Fig. 68] Fig. 68 is a graph obtained by plotting the discharge capacity with respect to the number of cycles of each material of the collector layer.
[Fig. 69] Fig. 69 is a graph obtained by plotting the discharge capacity with respect to the number of cycles of each material of the collector layer.
[Fig. 70] Fig. 70 is a graph obtained by plotting a discharge capacity retention rate with respect to the number of cycles of each material of the collector layer.

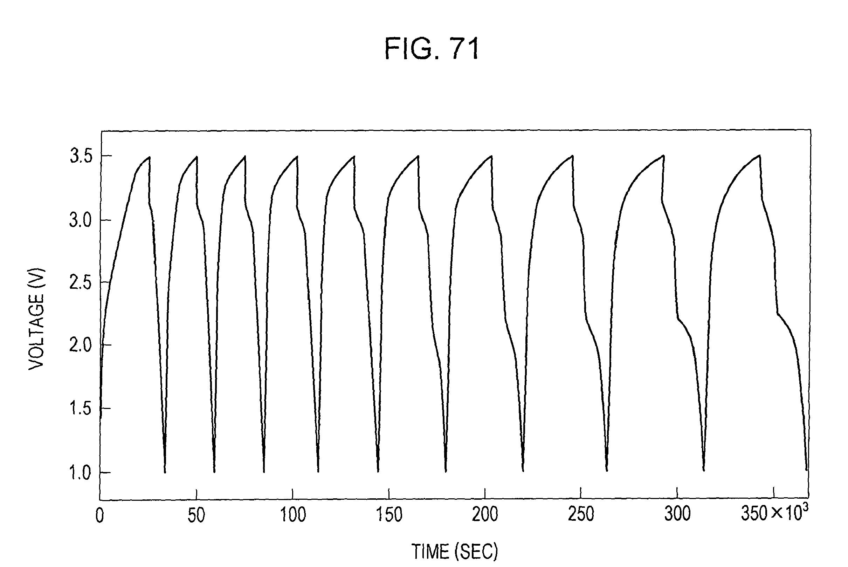

[Fig. 71] Fig. 71 is a graph showing a result of a charge and discharge test of Test Example 3-1.

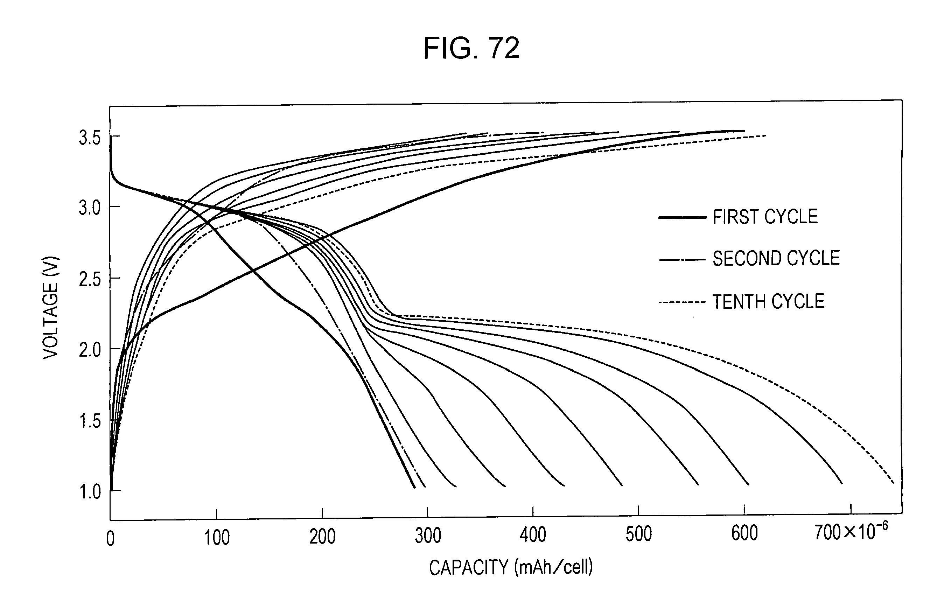

[Fig. 72] Fig. 72 is a graph showing results of the charge and discharge test of Test Example 3-1.

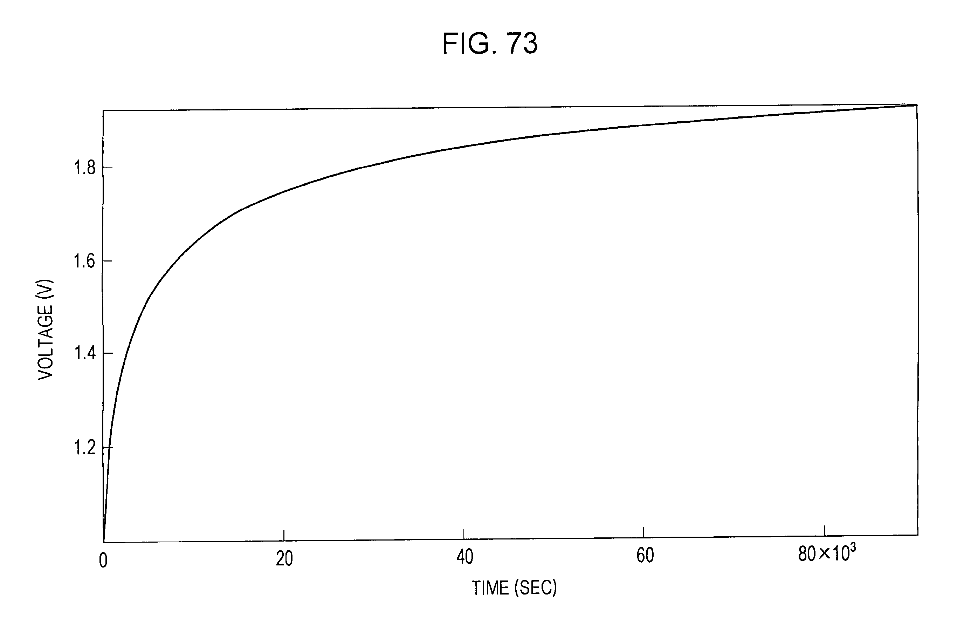

[Fig. 73] Fig. 73 is a graph showing a measurement result of an open-circuit voltage of Test Example 3-1.

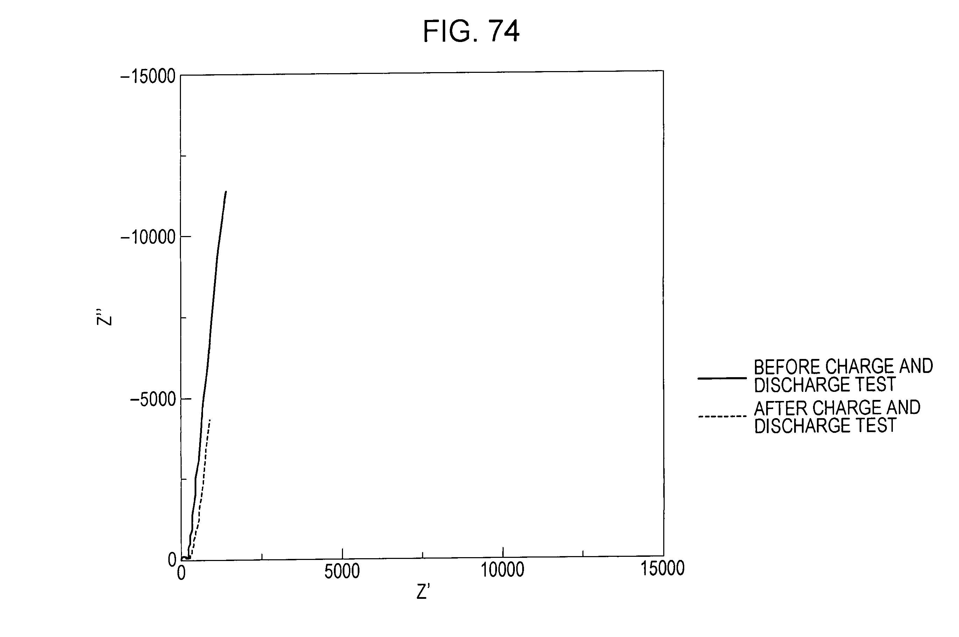

[Fig. 74] Fig. 74 is a Cole-Cole plot showing results of impedance measurement of Test Example 3-1.

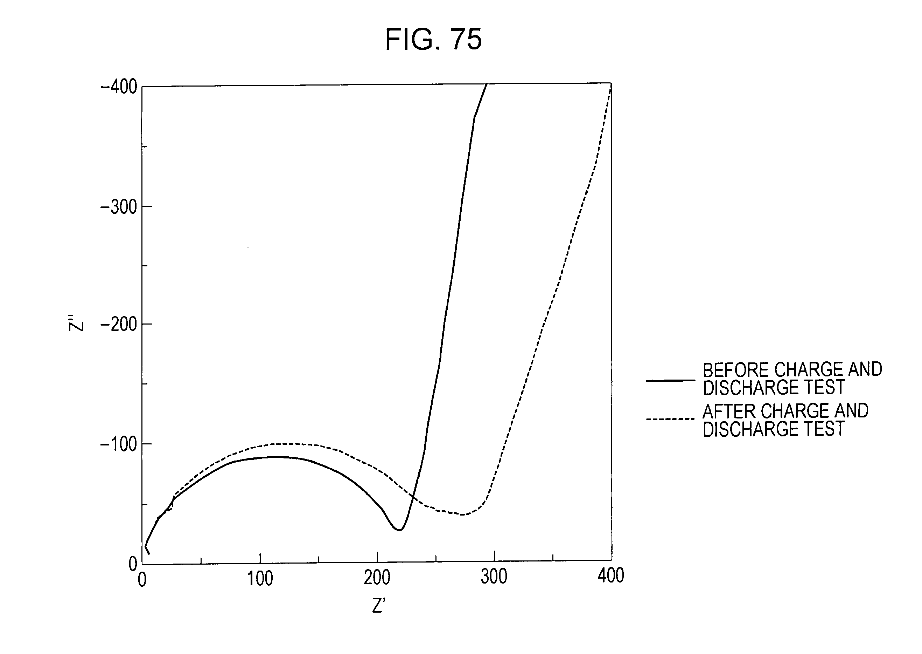

[Fig. 75] Fig. 75 is a Cole-Cole plot showing results of the impedance measurement of Test Example 3-1.

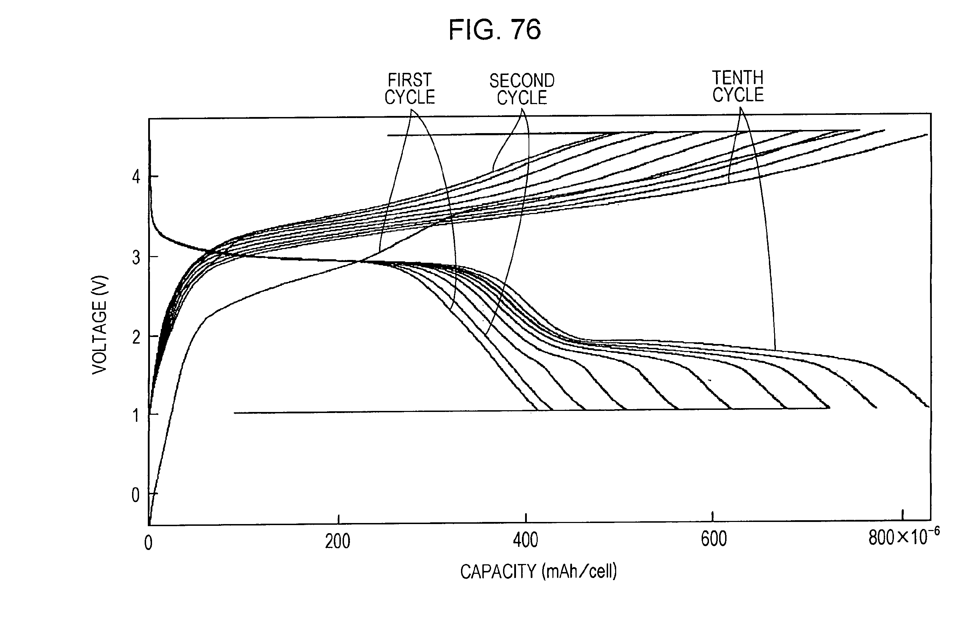

[Fig. 76] Fig. 76 is a graph showing results of a charge and discharge test of Test Example 3-2.

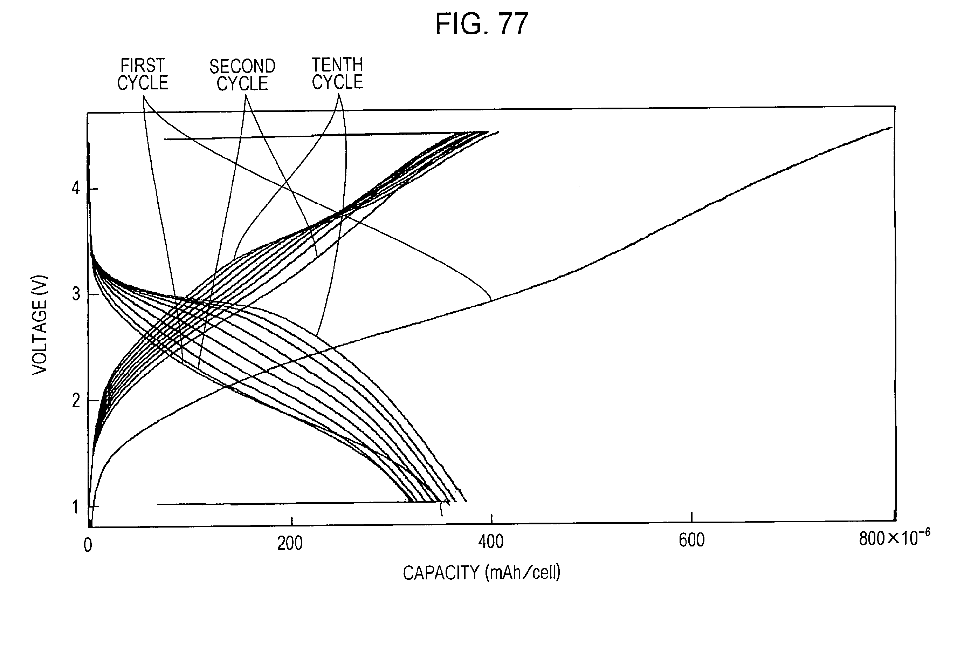

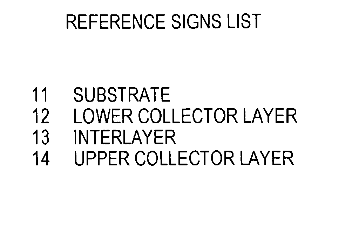

[Fig. 77] Fig. 77 is a graph showing results of a charge and discharge test of Test Example 3-3.

### Description of Embodiments

Hereinafter, embodiments of the present invention will be described with reference to the drawings. The embodiments described below are each a concrete example of the present invention, and technically desirable various limitations are also described; however, in the following description, it is to be understood that the scope of the present invention is not limited to the embodiments unless otherwise particularly stated. In addition, description will be made in the following order.
1. First embodiment (a first example of a method for manufacturing a solid electrolyte battery)
2. Second embodiment (a second example of the method for manufacturing a solid electrolyte battery)
3. Third embodiment (a third example of the method for manufacturing a solid electrolyte battery)
4. Other embodiments (modifications)

### 1. First embodiment (the first example of the method for manufacturing a solid electrolyte battery)

A method for manufacturing a solid electrolyte battery according to the first embodiment of the present invention will be described. When the method for manufacturing a solid electrolyte battery according to the first embodiment of the present invention is roughly classified, this method includes a laminate formation step of forming a laminate in which a lower collector layer, an interlayer, and an upper collector layer are laminated in this order on a substrate and a step of applying a voltage to the laminate.

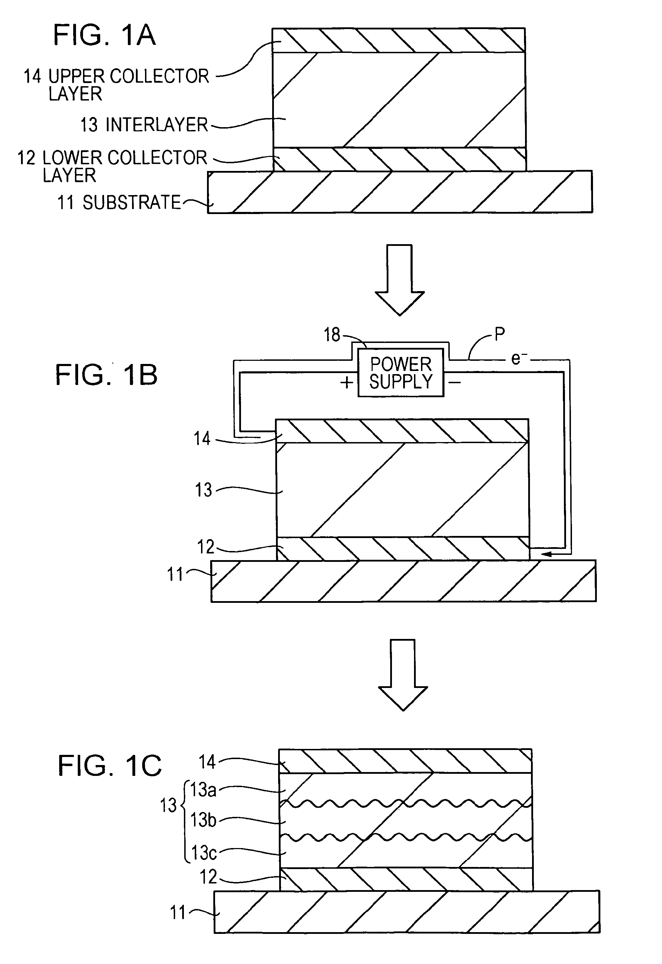

Hereinafter, the laminate formation step and the step of applying a voltage to a laminate will be described with reference to Fig. 1. In addition, Fig. 1A is a cross-sectional view illustrating the laminate formation step. Fig. 1B is a cross-sectional view illustrating the step of applying a voltage to a laminate. Fig. 1C is a cross-sectional view illustrating a solid electrolyte battery formed by the laminate formation step and the step of applying a voltage to a laminate.

### [Laminate formation step]

### [Laminate]

First, the laminate formed by the laminate formation step will be described. This laminate has the structure in which as shown in Fig. 1A, a lower collector layer 12, an interlayer 13, and an upper collector layer 14 are laminated in this order on a substrate 11. In the first embodiment, an example in which the lower collector layer 12, the interlayer 13, and the upper collector layer 14 are each formed as a thin film will be described.

In this embodiment, the thin film indicates a material which has a thickness, for example, of several micrometers or less and has a significantly small volume as compared to the surface area thereof, and the shape of this material is generally a flat plate. Although described later in the third embodiment and other embodiments, the present invention is not limited to the example in which all the layers are each formed as a thin film.

The substrate 11, the lower collector layer 12, the interlayer 13, and the upper collector layer 14, which form the laminate, will be described in more details.

### (Substrate)

As the substrate 11, for example, there may be used a substrate formed from an electrically insulating material, such as a glass, a ceramic including alumina, or a resin; a substrate formed from a semiconductor material, such as silicon; or a substrate formed from a conductive material, such as aluminum, copper, or stainless steel. Although the shape of the substrate 11 is not particularly limited, for example, a plate, a sheet, a film, or a block shape may be mentioned. The substrate 11 may have either hard or flexible properties and can use various materials in a wide range of fields.

### (Lower collector layer)

The lower collector layer 12 is a thin film formed from a collector material having good chemical stability and electrical conductivity. As this collector material, for example, a metal material, such as aluminum, nickel, copper, ITO (Indium Tin Oxide), titanium, platinum, gold, silver, or stainless steel, or carbon may be mentioned. Among those mentioned above, since more excellent battery characteristics can be obtained, copper is preferable.

### (Interlayer)

The interlayer 13 is a thin film formed from a lithium ion conductive material having lithium ion conductivity and very small electron mobility which can almost be ignored. As the lithium ion conductive material described above, for example, a compound containing lithium and phosphorus, such as Li₃P0₄ or LiPON formed by adding nitrogen to Li₃PO₄, may be mentioned. This thin film is, for example, amorphous and is a thin film having high transparency.

### (Upper collector layer)

The upper collector layer 14 is a thin film formed from a collector material having good chemical stability and electrical conductivity. As this collector material, for example, a metal material, such as aluminum, nickel, copper, ITO (Indium Tin Oxide), titanium, platinum, gold, silver, or stainless steel, or carbon may be mentioned. Among those mentioned above, since more excellent battery characteristics can be obtained, copper is preferable. In addition, the material for the upper collector layer 14 may be identical to or different from the material for the lower collector layer 12.

### [Formation of laminate (formation of the lower collector layer 12, the interlayer 13, and the upper collector layer 14)]

The laminate can be obtained by forming a thin film to be used as the lower collector layer 12, a thin film to be used as the interlayer 13, and a thin film to be used as the upper collector layer 14 in this order on the substrate 11.

### (Formation method of thin film)

A formation method of each of the thin films to be used as the lower collector layer 12, the interlayer 13, and the upper collector layer 14 will be described.

Each thin film can be formed, for example, by a vapor phase method, such as a PVD (Physical Vapor Deposition: physical vapor phase growth) method or a CVD (Chemical Vapor Deposition: chemical vapor phase growth) method. In addition, the formation can be performed by a liquid phase method, such as electroplating, electroless plating, a coating method, or a sol-gel method. In addition, the formation can be performed by a solid phase method, such as an SPE (solid phase epitaxy) method or an LB (Langmuir-Blodgett) method.

The PVD method is a method in which after a thin film-forming material to be formed into a thin film is vaporized and evaporated using energy, such as heat and/or plasma, a thin film is formed on a substrate. As the PVD method, for example, a vacuum deposition method, a sputtering method, an ion plating method, an MBE (molecular beam epitaxy) method, and a laser ablation method may be mentioned.

The CVD method is a method in which energy, such as heat, light, and/or plasma, is applied to a material supplied in the form of gas forming a thin film to cause decomposition and reaction of raw material gas molecules and to form an intermediate product, and a thin film is deposited through adsorption, reaction, and desorption, each of which occurs on a substrate surface.

As the CVD method, for example, a thermal CVD method, an MOCVD (Metal Organic Chemical Vapor Deposition:
organometallic vapor phase growth) method, an RF plasma CVD method, a photo-CVD method, a laser-CVD method, and an LPE (Liquid Phase Epitaxy) method may be mentioned.

By the thin-film forming methods described above, it is easy for a person skilled in the art to form the thin films to be used as the lower collector layer 12, the interlayer 13, and the upper collector layer 14, each having a desired composition. That is, a person skilled in the art can easily form the thin films to be used as the lower collector layer 12, the interlayer 13, and the upper collector layer 14, each having a desired composition, by appropriately selecting thin film raw materials, thin-film forming methods, thin-film forming conditions, and the like.

### [Formation example of laminate]

Hereinafter, an example of laminate formation will be described in which the laminate is formed by forming the thin films to be used as the lower collector layer 12, the interlayer 13, and the upper collector layer 14 using a sputtering method as one example.

Incidentally, of course, the formation of the respective thin films to be used as the lower collector layer 12, the interlayer 13, and the upper collector layer 14 is not limited to a sputtering method, and the thin-film forming methods described above may be widely applied.

### (Sputtering apparatus)

First, an example of an RF (high frequency) magnetron sputtering apparatus used for manufacturing the laminate will be described. In addition, the structure of this sputtering apparatus is just one example, and the sputtering apparatus used for manufacturing the laminate is not limited to this structure.

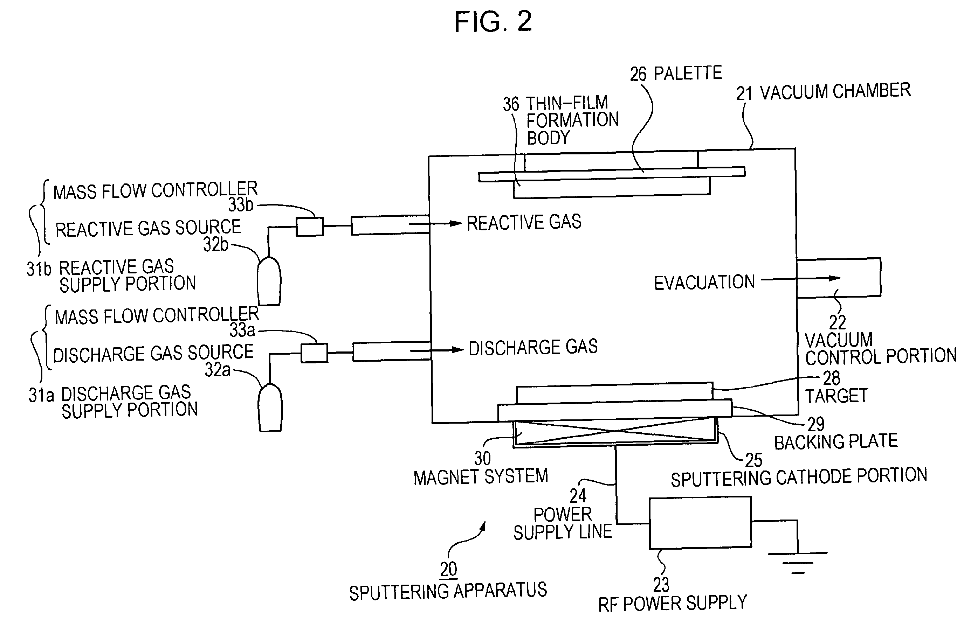

As shown in Fig. 2, this sputtering apparatus 20 includes a vacuum chamber 21 used as a film-formation room, a vacuum control portion 22 which controls vacuum conditions in this vacuum chamber 21, and an RF power supply 23 for plasma discharge. In addition, there are also included a sputtering cathode portion 25 connected to this RF power supply 23 through a power supply line 24 and a palette 26 disposed to face this sputtering cathode portion 25 with a predetermined distance therebetween. Furthermore, a discharge gas supply portion 31a for supplying an inert gas, such as an argon gas, in the vacuum chamber 21 is included. A reactive gas supply portion 31b for supplying a reactive gas, such as a nitrogen gas and/or an oxygen gas, in the vacuum chamber 21 is included.

The discharge gas supply portion 31a is formed of a discharge gas source 32a in which a discharge gas, such as an argon gas, which is an inert gas, is stored, and a mass flow controller 33a which controls a gas flow of a discharge gas supplied to the vacuum chamber 21. The discharge gas is supplied to the vacuum chamber 21 from the discharge gas source 32a through the mass flow controller 33a.

The reactive gas supply portion 31b is formed of a reactive gas source 32b in which a reactive gas, such as a nitrogen gas and/or an oxygen gas, is stored, and a mass flow controller 33b which controls a gas flow of a reactive gas supplied to the vacuum chamber 21. The reactive gas is supplied to the vacuum chamber 21 from the reactive gas source 32b through the mass flow controller 33b.

The sputtering cathode portion 25 has a target 28 functioning as a negative electrode, a backing plate 29 configured to fix the target 28, and a magnet system 30 provided on the surface of the backing plate 29 opposite to the surface thereof to which the target 28 is fixed.

In addition, a pair of electrodes is formed from the palette 26 functioning as a positive electrode and the target 28 functioning as the negative electrode. On the palette 26, a thin-film formation body 36 on which a thin film is to be formed is fitted so as to face the sputtering cathode portion 25.

As described above, the sputtering apparatus 20 for forming each thin film is formed. An example in which the laminate shown in Fig. 1A is formed using this sputtering apparatus 20 will be described.

### [Formation of laminate]

### (Formation of lower collector layer)

First, after being carried in the sputtering apparatus 20 in which a target 28 of a material to be formed into the lower collector layer 12 is placed, the substrate 11 is fixed to the palette 26. Next, the inside of the vacuum chamber 21 is evacuated to a predetermined pressure. Then, a thin film to be used as the lower collector layer 12 is formed on the substrate 11 by introducing an inert gas, such as an argon gas, in the vacuum chamber 21 from the discharge gas supply portion 31a and performing sputtering.

### (Formation of interlayer)

Next, after being carried in the sputtering apparatus 20 in which a target 28 of a lithium ion conductive material to be formed into the interlayer 13 is placed, the substrate 11 on which the lower collector layer 12 is formed is fixed to the palette 26.

Next, the inside of the vacuum chamber 21 is evacuated to a predetermined pressure. Then, a thin film to be used as the interlayer 13 is formed on the lower collector layer 12 formed in the previous step by introducing an inert gas, such as an argon gas, in the vacuum chamber 21 from the discharge gas supply portion 31a and performing sputtering.

In addition, in this step, reactive sputtering may also be performed. The reactive sputtering is a method in which a reactive gas, such as nitrogen gas and/or an oxygen gas, is introduced in the vacuum chamber 21 besides an inert gas, such as an argon gas, used as a discharge gas, and sputtering is performed. For example, a thin film of the aforementioned LiPON is formed in such a way that Li₃PO₄ is used as a target material, a nitrogen gas is introduced in the vacuum chamber 21, and sputtering is performed.

When the reactive sputtering is performed, an inert gas, such as an argon gas, is introduced in the vacuum chamber 21 from the discharge gas supply portion 31a, and furthermore, a reactive gas, such as a nitrogen gas and/or an oxygen gas, is introduced from the reactive gas supply portion 31b. Subsequently, by performing sputtering, the thin film to be used as the interlayer 13 is formed on the lower collector layer 12 formed in the previous step.

### (Formation of upper collector layer)

Next, after being carried in the sputtering apparatus 20 in which a target 28 of a material to be formed into the upper collector layer 14 is placed, the substrate 11 on which the interlayer 13 is formed is fixed to the palette 26. Next, the inside of the vacuum chamber 21 is evacuated to a predetermined pressure. Then, a thin film to be used as the upper collector layer 14 is formed on the interlayer 13 formed in the previous step by introducing an inert gas, such as an argon gas, in the vacuum chamber 21 and performing sputtering. As described above, the laminate shown in Fig. 1A can be obtained.

### [Step of applying voltage]

As shown in Fig. 1B, a voltage is applied to the laminate formed in the laminate formation step. A voltage is applied to the laminate, for example, by connecting a + terminal of a power supply 18 to the upper collector layer 14 and connecting a - terminal of the power supply to the lower collector layer 12. In this case, electrons flow in a direction indicated by an arrow P. Although the intensity of the voltage to be applied is, for example, in a range of 3 to 8 V, the intensity is not limited thereto. The intensity of the voltage to be applied may be lower or higher than the above range. By this step, the state of the laminate is changed, and by this change, the laminate starts to function as a solid electrolyte battery in which charge and discharge operation can be stably performed.

### [Change in state of laminate]

By the step of applying a voltage, the state of the laminate is changed from the state shown in Fig. 1A to the state shown in Fig. 1C.

The laminate shown in this Fig. 1C has the substrate 11/the lower collector layer 12/a region 13c/a region 13b/a region 13a/the upper collector layer 14. That is, by applying a voltage, the lithium ion conductive material is changed, so that the interlayer 13 have the region 13c, the region 13b, and the region 13a.

This region 13c is a region (negative electrode region) in which lithium ions are occluded at the time of charge and from which lithium ions are released at the time of discharge. The region 13b is a region (solid electrolyte region) functioning as a medium conducting lithium ions at the time of charge and discharge. The region 13a is a region (positive electrode region) from which lithium ions are released at the time of charge and in which lithium ions are occluded at the time of discharge.

The laminate shown in Fig. 1C functions as a solid electrolyte battery (secondary battery) in which lithium ions move to the region 13c from the region 13a via the region 13b at the time of charge and in which lithium ions move to the region 13a from the region 13c via the region 13b at the time of discharge.

These region 13a, region 13b, and region 13c are formed by applying a voltage once to the laminate shown in Fig. 1A, and the regions thus formed are maintained also by subsequent charge and discharge. Therefore, the laminate shown in Fig. 1C functions as a solid electrolyte battery in which charge and discharge operation can be performed.

These region 13a, region 13b, and region 13c of the laminate shown in this Fig. 1C are formed when a single layer (single thin film) is changed. Accordingly, the interfacial resistances between the regions 13a and 13b and between the regions 13b and 13c are each very low.

### [Effects]

In the solid electrolyte battery obtained according to the first embodiment of the present invention, the region 13c/region 13b/region 13a are formed in the single layer (interlayer 13) and function as a solid electrolyte battery. Hence, the interfacial resistance generated between the regions is low.

In the method for manufacturing a solid electrolyte battery according to the first embodiment of the present invention, since the number of types of materials forming thin films is small, the number of manufacturing steps can be substantially reduced.

That is, in the thin film battery disclosed in Domestic Re-publication of PCT International Publication for Patent Application No. 2006/082846 (hereinafter, referred to as "thin-film battery of Domestic Re-publication of PCT International Publication for Patent Application No. 2006/082846") described in the column of Background Art by way of example, four types of thin films of different materials must be formed for the collector layer/positive electrode active material layer/solid electrolyte layer/negative electrode active material layer/collector layer. For example, when the thin films are each formed by a sputtering method, four types of targets of materials corresponding to the respective layers are necessary, and the target materials and the like must be exchanged for the formation of the respective layers.

On the other hand, in the method for manufacturing a solid electrolyte battery according to the first embodiment of the present invention, the number of types of materials forming the thin films for the lower collector layer 12/interlayer 13/upper collector layer 14 is three or two which is smaller than that in the past. Hence, compared to the thin film battery disclosed in Domestic Re-publication of PCT International Publication for Patent Application No. 2006/082846, the exchange of target materials and the like is not necessarily performed for one or two types of targets, and the number of manufacturing steps can be reduced. By the way, when the number of types of materials is two, the type of thin film of the lower collector layer 12 is identical to the type of thin film of the upper collector layer 14.

In the method for manufacturing a solid electrolyte battery according to the first embodiment of the present invention, the material cost for forming a solid electrolyte battery can be reduced as compared to that in the past. That is, for example, in the thin-film battery of Domestic Re-publication of PCT International Publication for Patent Application No. 2006/082846, as the positive electrode active material, a material containing a rare metal, such as nickel and/or manganese, is used. However, in the first embodiment, since the solid electrolyte battery can be formed without using a material containing a rare metal as described above, the material cost can be reduced.

Since the number of the thin films formed for the solid electrolyte battery obtained according to the first embodiment of the present invention is small, peeling and cracking caused by a stress are not likely to occur, and this battery has a long life. That is, for example, in the thin-film battery of Domestic Re-publication of PCT International Publication for Patent Application No. 2006/082846, the number of the thin films formed therefor is five. On the other hand, since the number of the thin films formed in the first embodiment is three, as compared with the battery in the past, peeling and cracking caused by a stress are not likely to occur, and the battery thus formed has a long life.

In the solid electrolyte battery obtained according to the first embodiment of the present invention, since the number of the thin films formed therefor is small, an adverse influence of thermal expansion caused by the change in temperature is small, and hence, a thin substrate or a soft substrate made of a resin or the like can be used. That is, for example, in the thin-film battery of Domestic Re-publication of PCT International Publication for Patent Application No. 2006/082846, the number of the thin films formed therefor is five. On the other hand, since the number of the thin films formed in the solid electrolyte battery according to the first embodiment is three, as compared with the battery in the past, an adverse influence of thermal expansion caused by the change in temperature is small, and hence, a thin substrate or a soft substrate made of a resin or the like can be used.

In the solid electrolyte battery obtained according to the first embodiment of the present invention, a battery having a high transmittance can be obtained by forming the upper collector layer 14 and the lower collector layer 12 from a highly transparent material, such as ITO, and forming the interlayer 13 from a highly transparent Li₃PO₄ or LiPON.

### 2. Second embodiment

A method for manufacturing a solid electrolyte battery according to the second embodiment of the present invention will be described. In the method for manufacturing a solid electrolyte battery according to the second embodiment of the present invention, a step of applying a voltage to a laminate is different from that of the first embodiment, and the others are similar to those of the first embodiment.

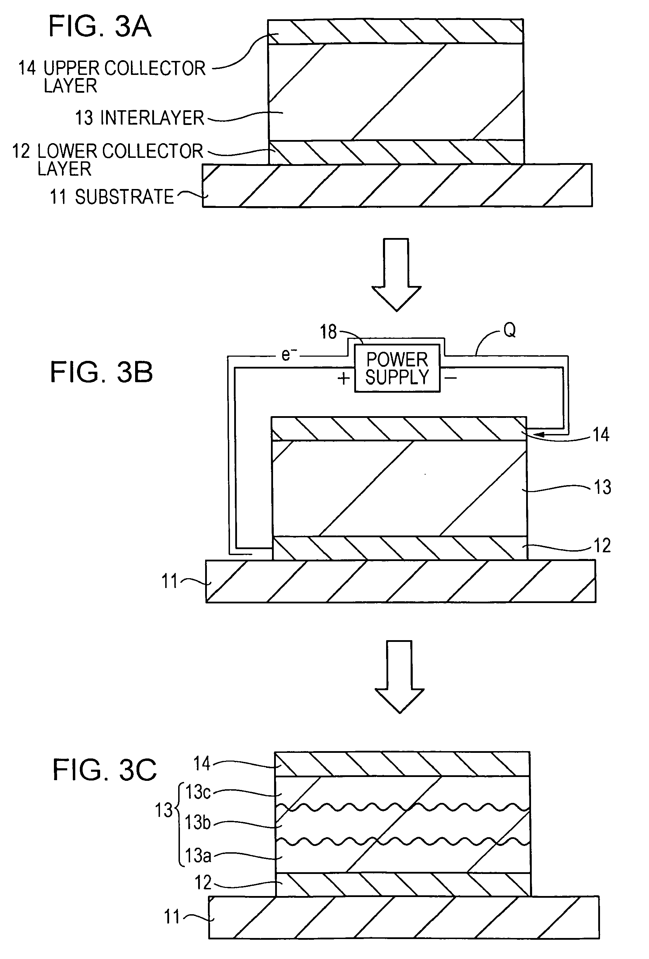

Hereinafter, with reference to Fig. 3, the method for manufacturing a solid electrolyte battery according to the second embodiment of the present invention will be described. In addition, Fig. 3A is a cross-sectional view illustrating a laminate formation step. Fig. 3B is a cross-sectional view illustrating the step of applying a voltage to a laminate. Fig. 3C is a cross-sectional view illustrating a solid electrolyte battery formed by the laminate formation step and the step of applying a voltage. In this embodiment, the same member as that shown in Fig. 1 is designated by the same reference numeral, and description thereof is appropriately to be omitted.

### [Laminate formation step]

First, the laminate shown in Fig. 3A is formed. Since the structure of the laminate and the step of forming the laminate are similar to those of the first embodiment, detailed description is omitted.

### [Step of applying voltage]

Next, as shown in Fig. 3B, a voltage is applied to the laminate formed in the laminate formation step. A voltage is applied to the laminate, for example, by connecting the + terminal of the power supply 18 to the lower collector layer 12 and connecting the - terminal of the power supply 18 to the upper collector layer 14. In this case, electrons flow in a direction indicated by an arrow Q. By this step, the state of the laminate is changed, and by this change, the laminate starts to function as a solid electrolyte battery in which charge and discharge operation can be stably performed.

### [Change in state of laminate]

By the step of applying a voltage, the state of the laminate is changed from the state shown in Fig. 3A to the state shown in Fig. 3C.

The laminate shown in this Fig. 3C has the substrate 11/the lower collector layer 12/a region 13a/a region 13b/a region 13c/the upper collector layer 14. That is, by applying a voltage, the lithium ion conductive material is changed, so that the interlayer 13 have the region 13a, the region 13b, and the region 13c.

This region 13a is a region (positive electrode region) from which lithium ions are released at the time of charge and in which lithium ions are occluded at the time of discharge. The region 13b is a region (solid electrolyte region) functioning as a medium conducting lithium ions at the time of charge and discharge. The region 13c is a region (negative electrode region) in which lithium ions are occluded at the time of charge and from which lithium ions are released at the time of discharge.

The laminate shown in Fig. 3C functions as a solid electrolyte battery (secondary battery) in which lithium ions move to the region 13c from the region 13a via the region 13b at the time of charge and in which lithium ions move to the region 13a from the region 13c via the region 13b at the time of discharge.

These region 13a, region 13b, and region 13c are formed by applying a voltage once to the laminate shown in Fig. 3A, and the regions thus formed are maintained also by subsequent charge and discharge. Therefore, the laminate shown in Fig. 3C functions as a solid electrolyte battery in which charge and discharge operation can be performed.

These region 13a, region 13b, and region 13c of the laminate shown in this Fig. 3C are formed when a single layer (single thin film) is changed. Accordingly, the interfacial resistances between the regions 13a and 13b and between the regions 13b and 13c are each very low.

### [Effects]

The method for manufacturing a solid electrolyte battery according to the second embodiment of the present invention has effects similar to those of the method for manufacturing a solid electrolyte battery according to the first embodiment.

### 3. Third embodiment

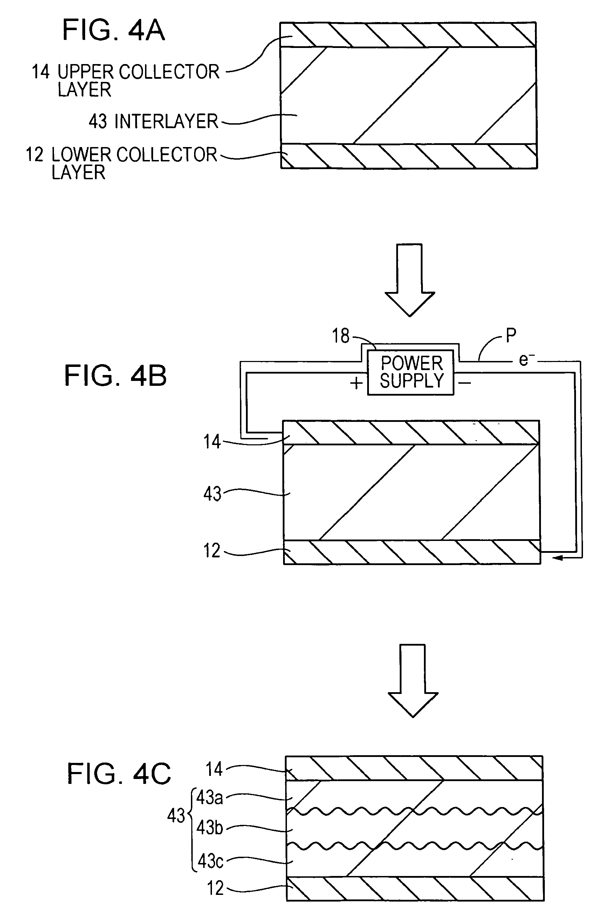

A method for manufacturing a solid electrolyte battery according to the third embodiment of the present invention will be described. In the method for manufacturing a solid electrolyte battery according to the third embodiment of the present invention, the structure of a laminate and a formation method thereof are different from those of the first embodiment. Hereinafter, with reference to Fig. 4, the method for manufacturing a solid electrolyte battery according to the third embodiment of the present invention will be described.

In addition, Fig. 4A is a cross-sectional view illustrating a laminate formation step. Fig. 4B is a cross-sectional view illustrating a step of applying a voltage to the laminate. Fig. 4C is a cross-sectional view illustrating a solid electrolyte battery formed by the laminate formation step and the step of applying a voltage. In addition, the same member as that shown in Fig. 1 is designated by the same reference numeral, and detailed description thereof is to be omitted.

### [Laminate formation step]

### [Laminate]

In the method for manufacturing a solid electrolyte battery according to the third embodiment of the present invention, the structure of the laminate is similar to that of the laminate shown in Fig. 1A except that the substrate 11 is omitted. That is, the laminate shown in Fig. 4A has the structure formed of the lower collector layer 12/an interlayer 43/the upper collector layer 14. In this laminate, the interlayer 43 is composed of a plate-shaped glass (glass substrate) formed from a lithium ion conductive material, such as Li₃PO₄, and by using this glass substrate as a thin-film formation object, thin films to be used as the upper collector layer 14 and the lower collector layer 12 are formed. In addition, the shape of this glass substrate is not limited a plate shape and may be, for example, in the form of a sheet, a film, or a block.

### [Formation of laminate]

First, a plate-shaped glass substrate is manufactured using a lithium ion conductive material as a raw material and is used as the interlayer 43. Next, the thin films to be used as the upper collector layer 14 and the lower collector layer 12 are formed to this interlayer 43. That is, the laminate is formed of the interlayer 43→the upper collector layer 14→the lower collector layer 12 in this order or is formed of the interlayer 43→the upper collector layer 14→the lower collector layer 12 in this order.

The plate-shaped glass substrate to be used as the interlayer 43 can be obtained by vitrifying and processing a raw material to have a predetermined shape by a conventionally proposed method, such as a fusion method or a low-temperature synthesis method, using a lithium ion conductive material as a raw material.

The fusion method is a method in which after a raw material to be formed into a glass is fused into a liquid state by direct heating, quenching is performed to vitrify the raw material. As the raw material to be formed into a glass, a single material or a mixture containing a plurality of materials may be used.

For example, when the interlayer 43 is formed of a glass substrate of Li₃PO₄, after Li₃PO₄ is fused, quenching and processing are performed to form a predetermined shape, so that the glass substrate of Li₃PO₄ can be obtained. In addition, a glass substrate of Li₃PO₄ may be obtained in such a way that after a mixture of phosphorus oxide, lithium oxide, and the like is fused, quenching and processing are performed to form a predetermined shape.

As the low-temperature synthesis method, for example, a sol-gel method and a liquid phase reaction method may be mentioned. For example, the sol-gel method is a method in which a sol solution of a metal alkoxide, a metal salt, or the like is processed by hydrolysis/polycondensation to form a gel, and this gel is processed by drying and heat treatment to form a glass.

### [Step of applying voltage]

Next, as shown in Fig. 4B, a voltage is applied to the laminate formed in the laminate formation step. A voltage is applied to the laminate, for example, by connecting the + terminal of the power supply 18 to the upper collector layer 14 and connecting the - terminal of the power supply 18 to the lower collector layer 12. In this case, electrons flow in a direction indicated by an arrow P. By this step, the state of the laminate is changed, and by this change, the laminate starts to function as a solid electrolyte battery in which charge and discharge operation can be stably performed.

### [Change in state of laminate]

By the step of applying a voltage, the state of the laminate is changed from the state shown in Fig. 4A to the state shown in Fig. 4C.

The laminate shown in this Fig. 4C has the lower collector layer 12/a region 43c/a region 43b/a region 43a/the upper collector layer 14. That is, by applying a voltage, the lithium ion conductive material is changed, so that the interlayer 43 have the region 43c, the region 43b, and the region 43a.

This region 43c is a region (negative electrode region) in which lithium ions are occluded at the time of charge and from which lithium ions are released at the time of discharge. The region 43b is a region (solid electrolyte region) functioning as a medium conducting lithium ions at the time of charge and discharge. The region 43a is a region (positive electrode region) from which lithium ions are released at the time of charge and in which lithium ions are occluded at the time of discharge.

The laminate shown in Fig. 4C functions as a solid electrolyte battery (secondary battery) in which lithium ions move to the region 43c from the region 43a via the region 43b at the time of charge and in which lithium ions move to the region 43a from the region 43c via the region 43b at the time of discharge.

These region 43a, region 43b, and region 43c are formed by applying a voltage once to the laminate shown in Fig. 4A, and the regions thus formed are maintained also by subsequent charge and discharge. Therefore, the laminate shown in Fig. 4C functions as a solid electrolyte battery in which charge and discharge operation can be performed.

These region 43a, region 43b, and region 43c of the laminate shown in this Fig. 4C are formed when a single layer is changed. Accordingly, the interfacial resistances between the regions 43a and 43b and between the regions 43b and 43c are each very low.

### [Effects]

In the solid electrolyte battery obtained according to the third embodiment of the present invention, the region 43c/region 43b/region 43a are formed in the single layer (interlayer 13) and function as a solid electrolyte battery. Hence, the interfacial resistances generated between the regions are low.

According to the method for manufacturing a solid electrolyte battery of the third embodiment of the present invention, since the number of types of thin films to be formed is small, the number of manufacturing steps can be substantially reduced. Since the number of types of materials forming the thin films for the lower collector layer 12 and the upper collector layer 14 is small, such as two or one, the number of manufacturing steps can be substantially reduced as compared with that in the past. By the way, when the number of types of materials is one, the type of material for the thin film of the lower collector layer 12 is identical to that of the upper collector layer 14.

In the method for manufacturing a solid electrolyte battery according to the third embodiment of the present invention, the material cost for forming a solid electrolyte battery can be reduced as compared with that in the past. That is, for example, in the thin-film battery of Domestic Re-publication of PCT International Publication for Patent Application No. 2006/082846, as the positive electrode active material, a material containing a rare metal, such as nickel and/or manganese, is used. However, according to the solid electrolyte battery obtained in the third embodiment, since the solid electrolyte battery is formed without using a material containing a rare metal as described above, the material cost can be reduced.

In addition, in the solid electrolyte battery obtained according to the third embodiment of the present invention, since the number of the thin films to be formed is small, peeling and cracking caused by a stress are not likely to occur, and the battery thus formed has a long life.

In addition, in the solid electrolyte battery obtained according to the third embodiment of the present invention, a battery having a high transmittance can be obtained by forming the upper collector layer 14 and the lower collector layer 12 from a highly transparent material, such as ITO.

### [Examples]

Hereinafter, although examples of the present invention will be described, the present invention is not limited thereto.

### [Test Examples 1-1 to 1-7] (examples in which test was performed using a substrate 11 side as a positive electrode)

### <Test Example 1-1>

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: Al
Pressure: 0.5 Pa
Sputtering gas: Ar: 10 sccm
Output: 50 W
Film-formation time: 15 minutes
Film thickness: 100 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Output: 300 W
Film-formation time: 6 hours
Film thickness: 800 nm

### [Formation of upper collector layer 14]

Next, a thin film to be used as the upper collector layer 14 was formed on the substrate 11 using a sputtering apparatus under the following sputtering conditions.

### (Sputtering conditions)

Target: Al
Pressure: 0.5 Pa
Sputtering gas: Ar: 10 sccm
Output: 50 W
Film-formation time: 15 minutes
Film thickness: 100 nm

The following tests were performed using this laminate.

### (Charge and discharge test)

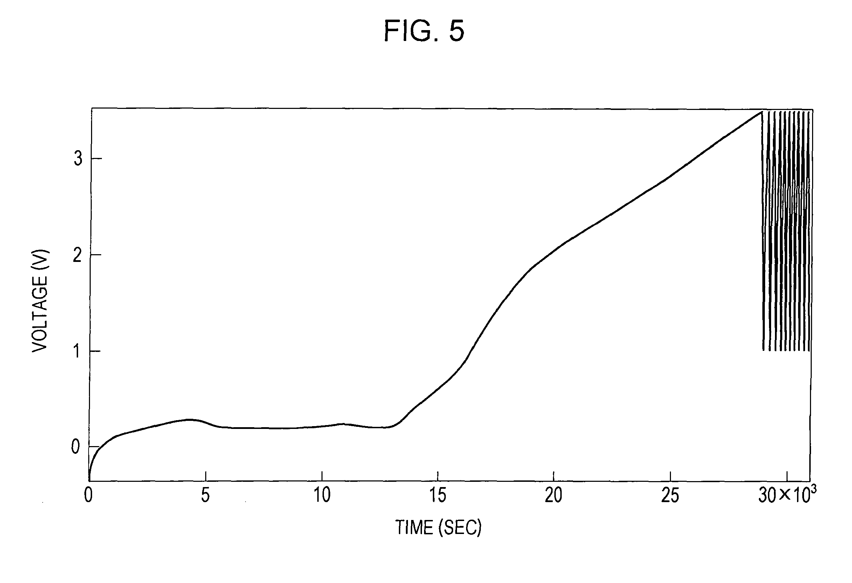

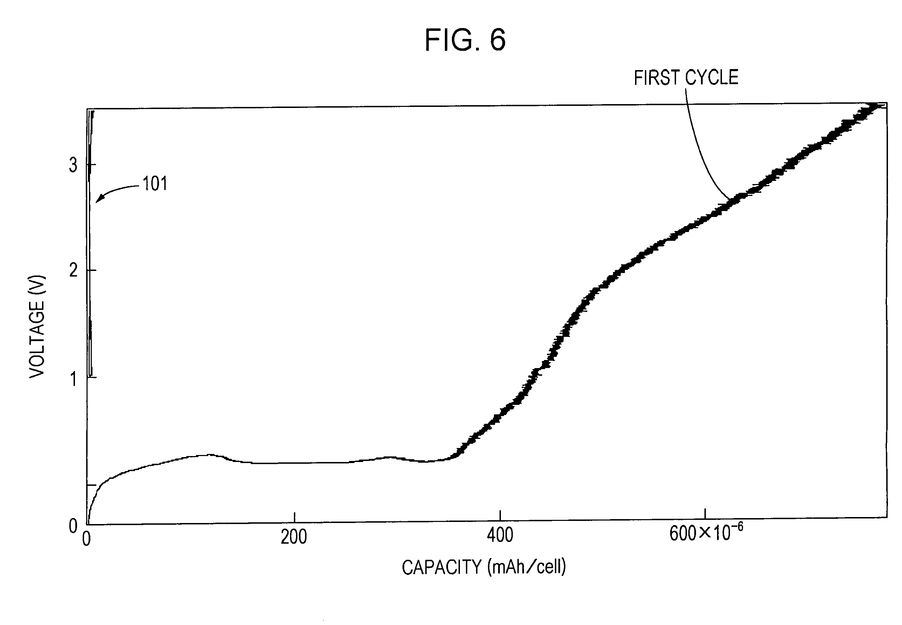

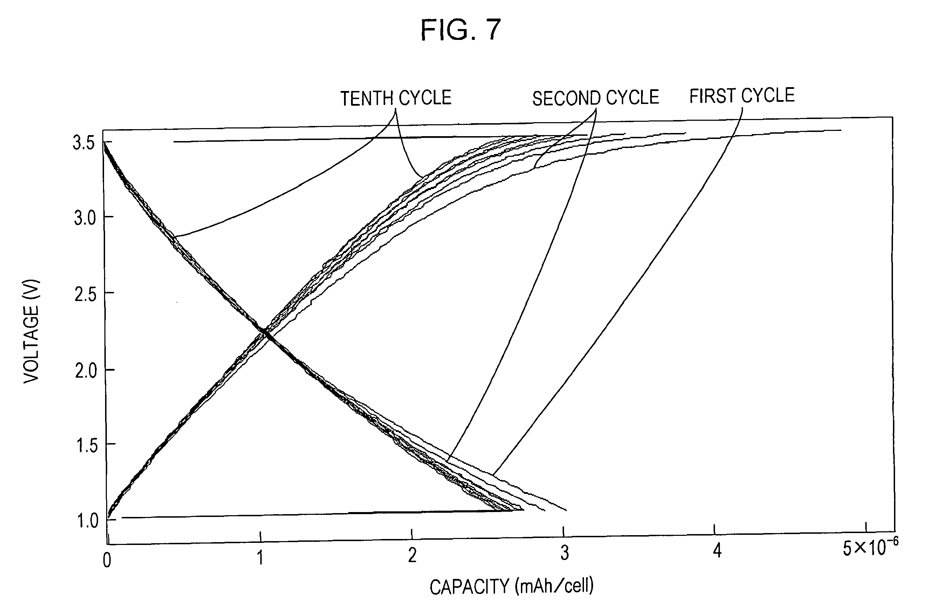

After a + terminal of a power supply was connected to the lower collector layer 12, and a - terminal of the power upper was connected to the upper collector layer 14, a charge and discharge test (number of cycles: 10) was performed at a constant current in such a way that a cut-off voltage of charge was set to 3.5 V, and a cut-off voltage of discharge was set to 1.0 V. In addition, the electric current at the time of charge and discharge was set to 0.1 µA, and the effective area was set to 1 cm × 1 cm (1 cm²). The measurement results are shown in Figs. 5, 6, and 7. In addition, Fig. 7 is an enlarged graph of a charge-and-discharge curve shown by an arrow 101 of Fig. 6.

### (Measurement of open-circuit voltage)

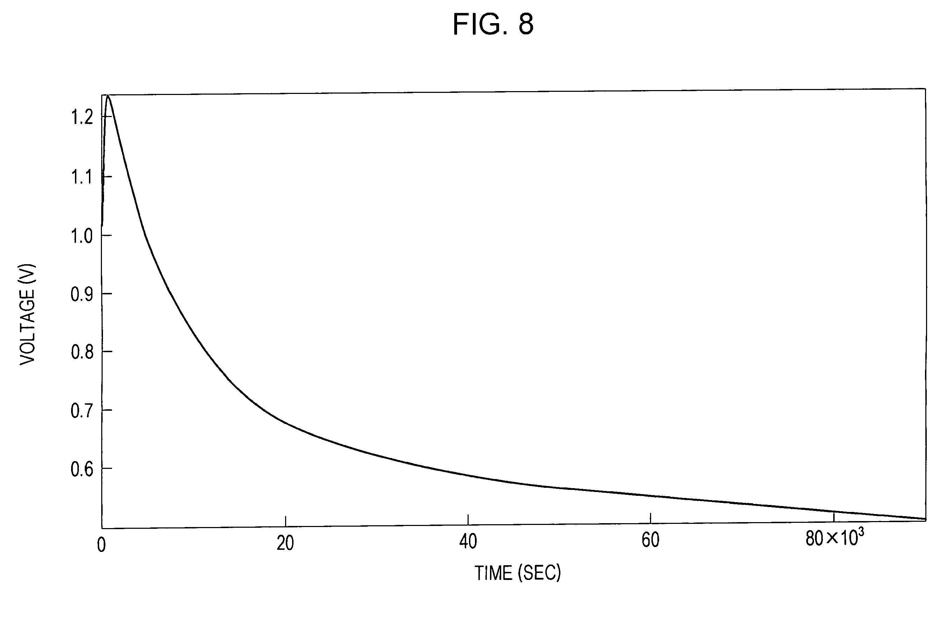

The laminate processed by the charge and discharge test (numbers of cycles: 10) was connected to an electrochemical measuring apparatus manufactured by Solartron, and an open-circuit voltage was monitored for 25 hours. The open-circuit voltage was measured at intervals of 1 minute, and the measurement result is shown in the graph of Fig. 8 in which the horizontal axis represents the time and the vertical axis represents the voltage.

### (Impedance measurement)

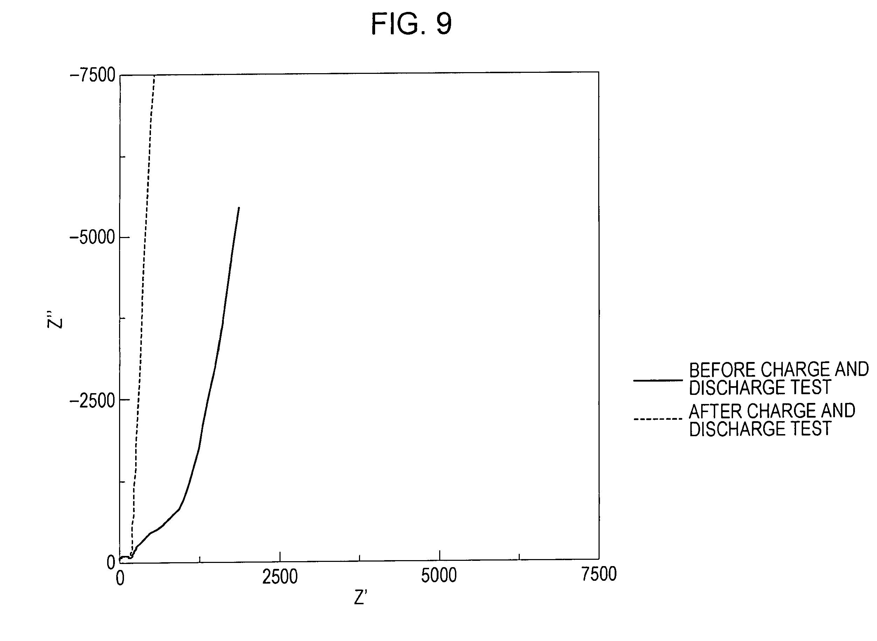

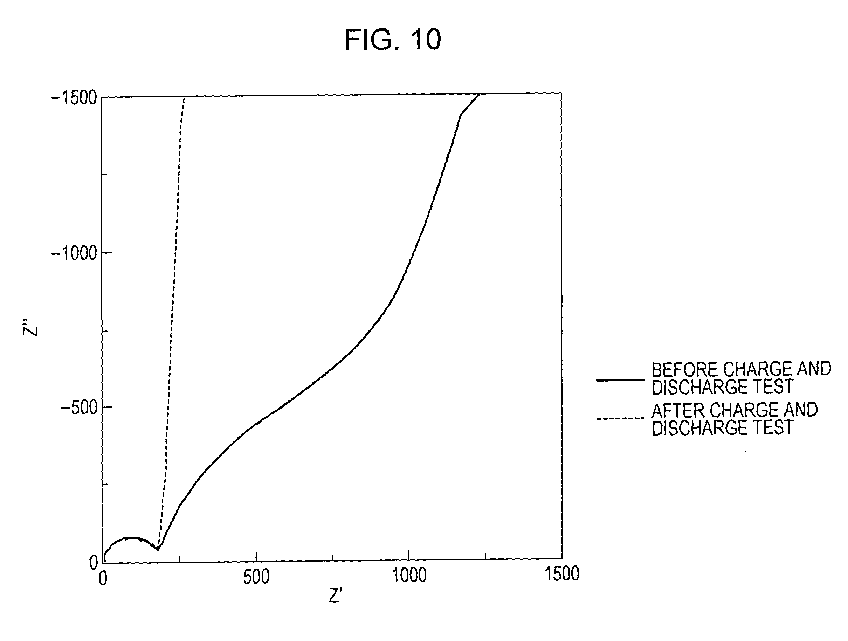

By an alternating-current impedance method, the impedance before and after the first cycle of the charge and discharge test was measured. The Cole-Cole plots of the measurement results are shown in Figs. 9 and 10. In addition, Fig. 10 is an enlarged graph of that shown in Fig. 9.

### <Test Example 1-2>

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: Cu
Pressure: 0.5 Pa
Sputtering gas: Ar: 20 sccm
Output: 50 W
Film-formation time: 8 minutes
Film thickness: 100 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Film-formation time: 6 hours
Output: 300 W
Film thickness: 800 nm

### [Formation of upper collector layer 14]

Next, a thin film to be used as the upper collector layer 14 was formed on the substrate 11 using a sputtering apparatus under the following sputtering conditions.

### (Sputtering conditions)

Target: Cu
Pressure: 0.5 Pa
Sputtering gas: Ar: 20 sccm
Output: 50 W
Film-formation time: 8 minutes
Film thickness: 100 nm

The (charge and discharge test), the (open-circuit voltage), and the (impedance measurement) were performed on this laminate in a manner similar to that of Test Example 1-1.

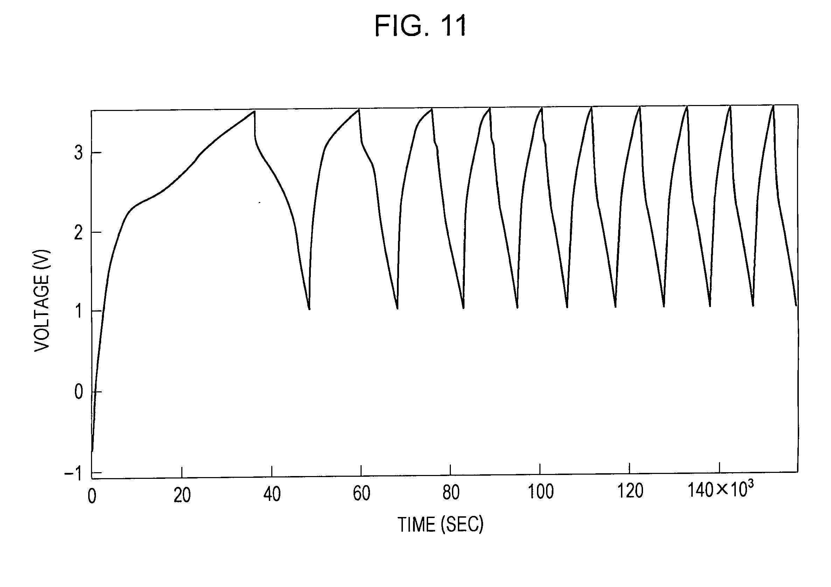

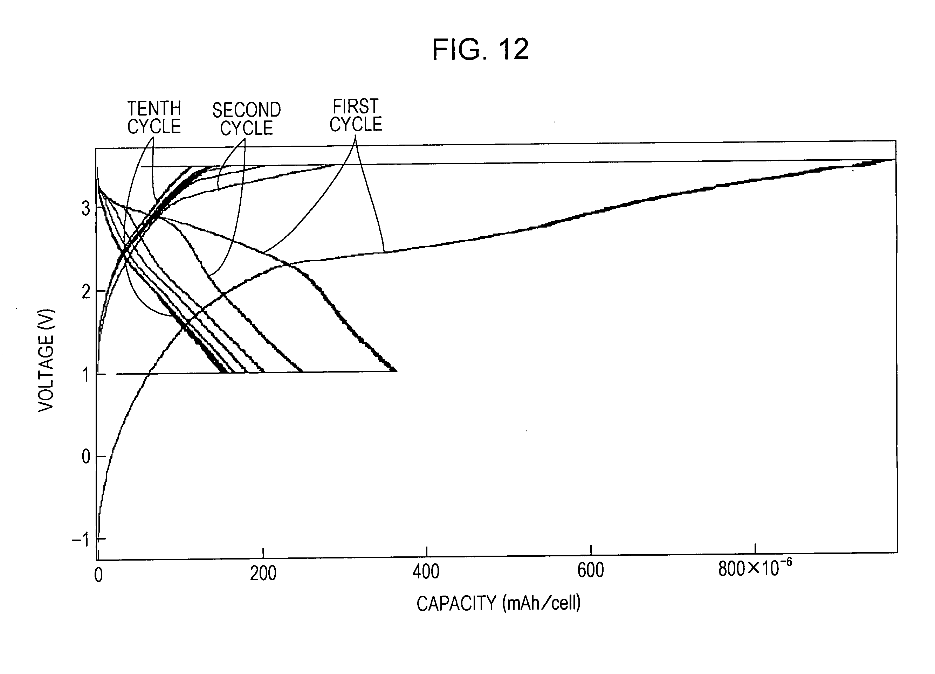

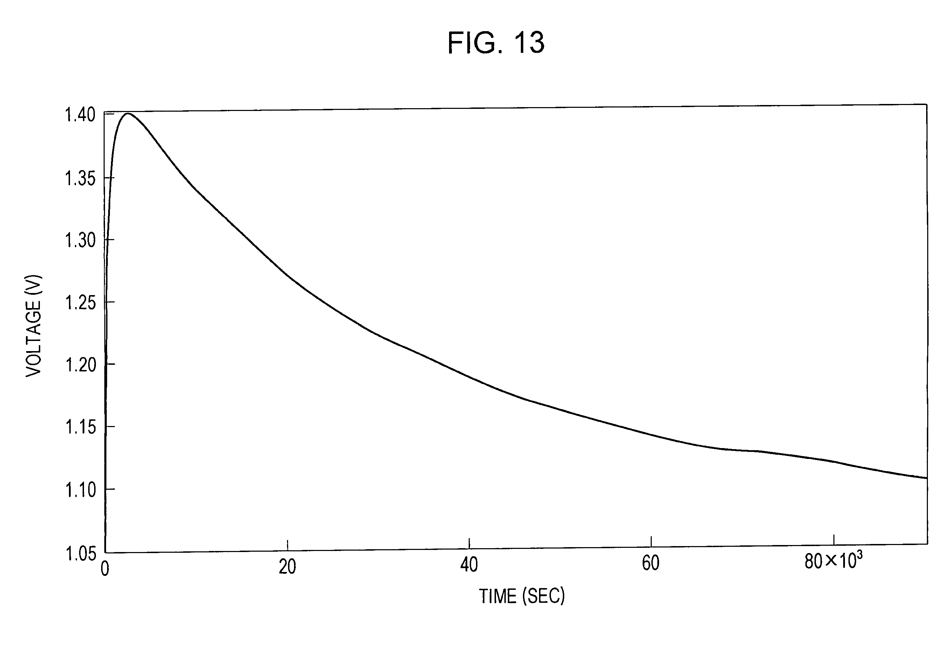

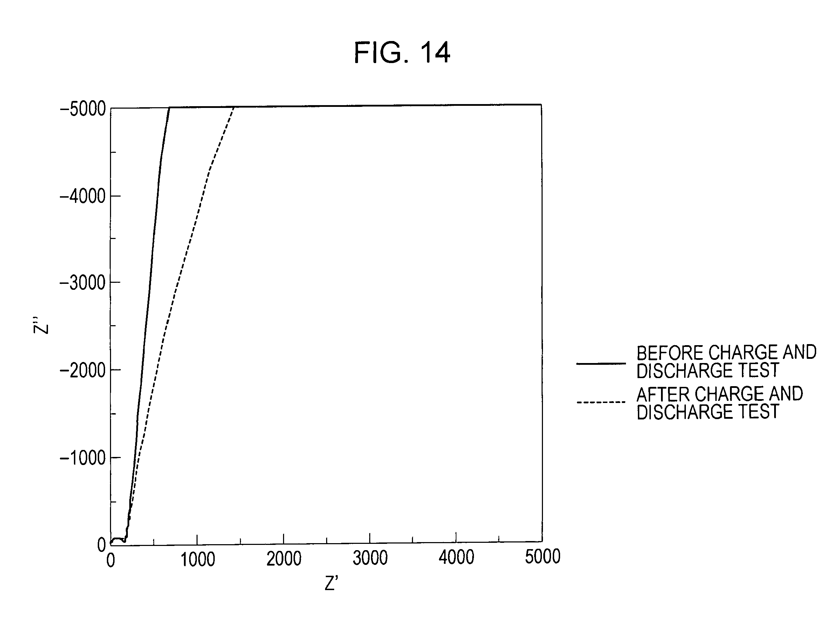

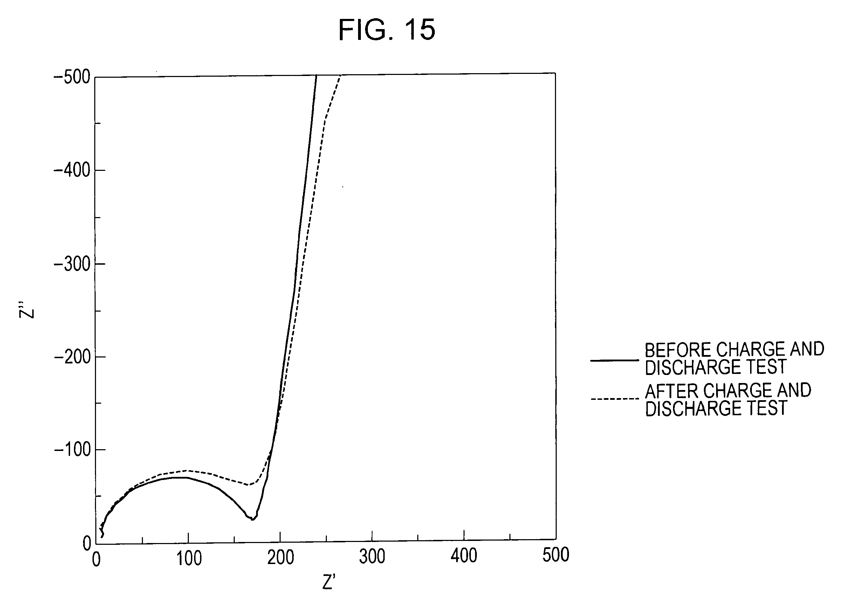

The results of the charge and discharge test are shown in Figs. 11 and 12. The result of the open-circuit voltage measurement is shown in Fig. 13. The Cole-Cole plots of the results of the impedance measurement are shown in Figs. 14 and 15.

### <Test Example 1-3>

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: ITO
Pressure: 0.5 Pa
Sputtering gas: Ar: 10 sccm
Output: 50 W
Film-formation time: 10 minutes
Film thickness: 100 nm

### [Formation of interlayer 13]

Next, the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Film-formation time: 6 hours
Output: 300 W
Film thickness: 800 nm

### [Formation of upper collector layer 14]

Next, the upper collector layer 14 was formed on the substrate 11 using a sputtering apparatus under the following sputtering conditions.

### (Sputtering conditions)

Target: ITO
Pressure: 0.5 Pa
Sputtering gas: Ar: 10 sccm
Output: 50 W
Film-formation time: 8 minutes
Film thickness: 100 nm

The (charge and discharge test), the (open-circuit voltage), and the (impedance measurement) were performed on this laminate in a manner similar to that of Test Example 1-1.

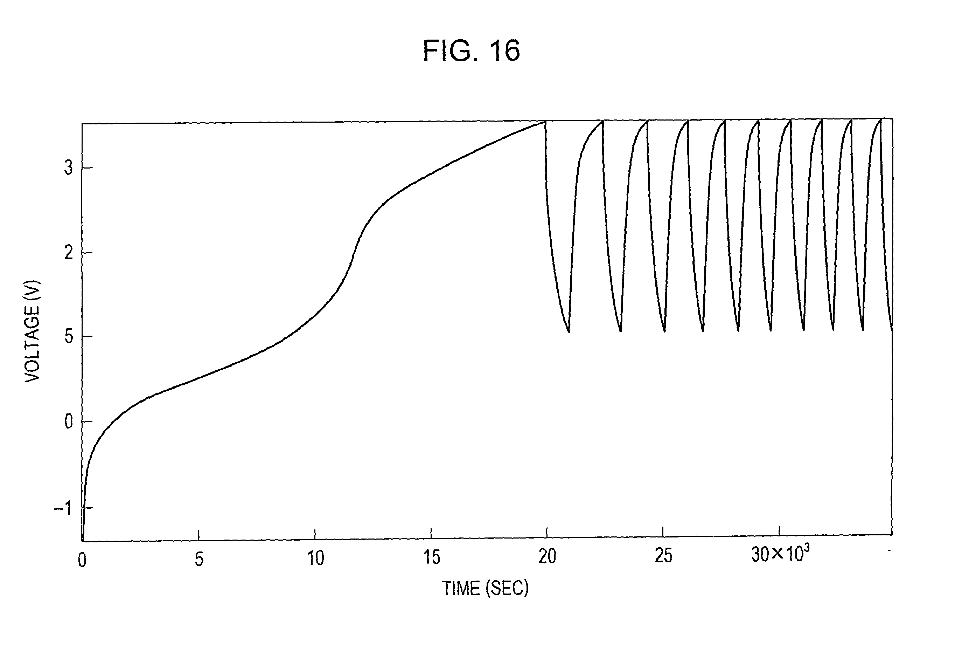

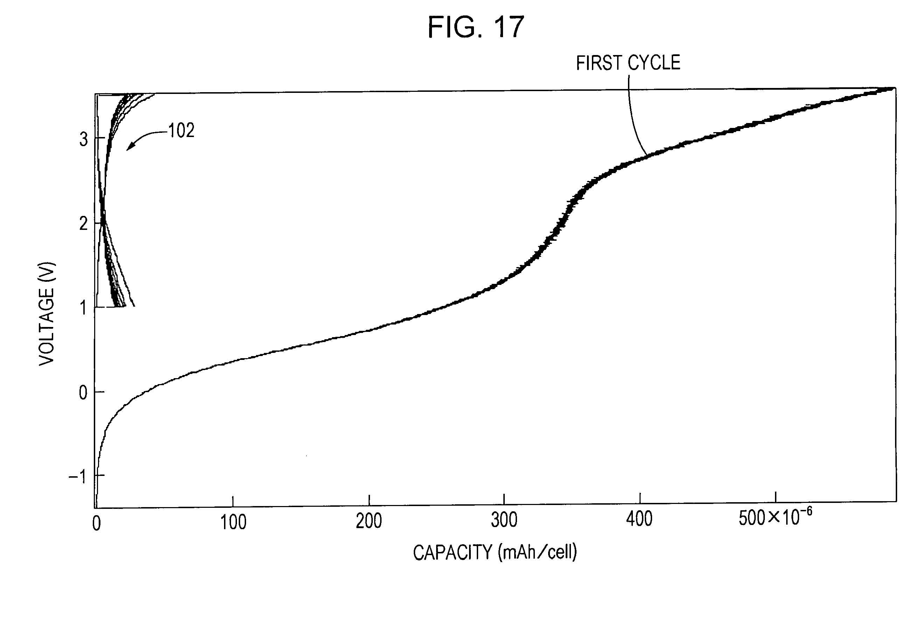

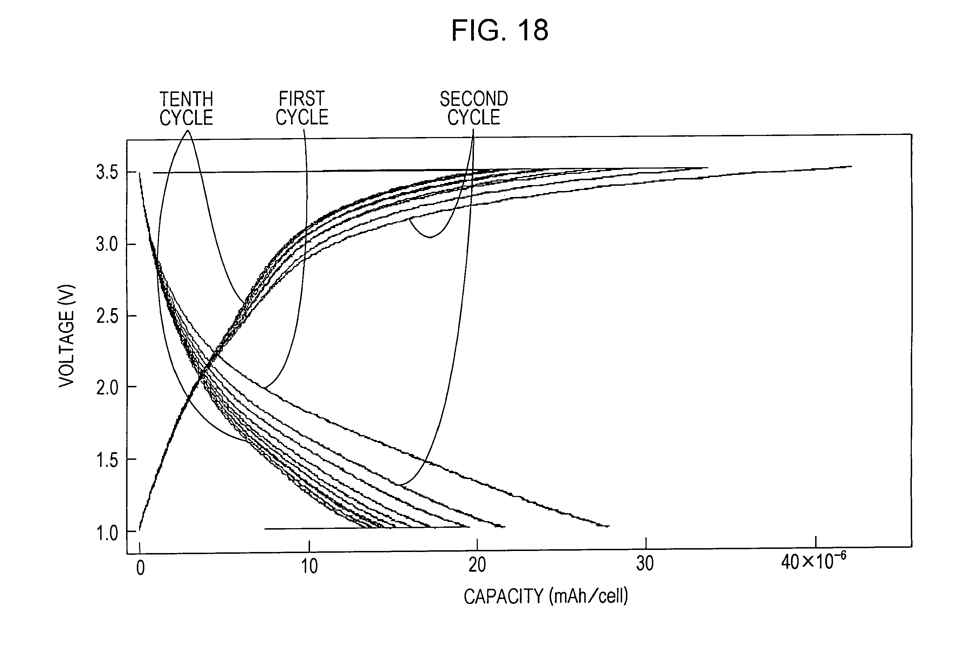

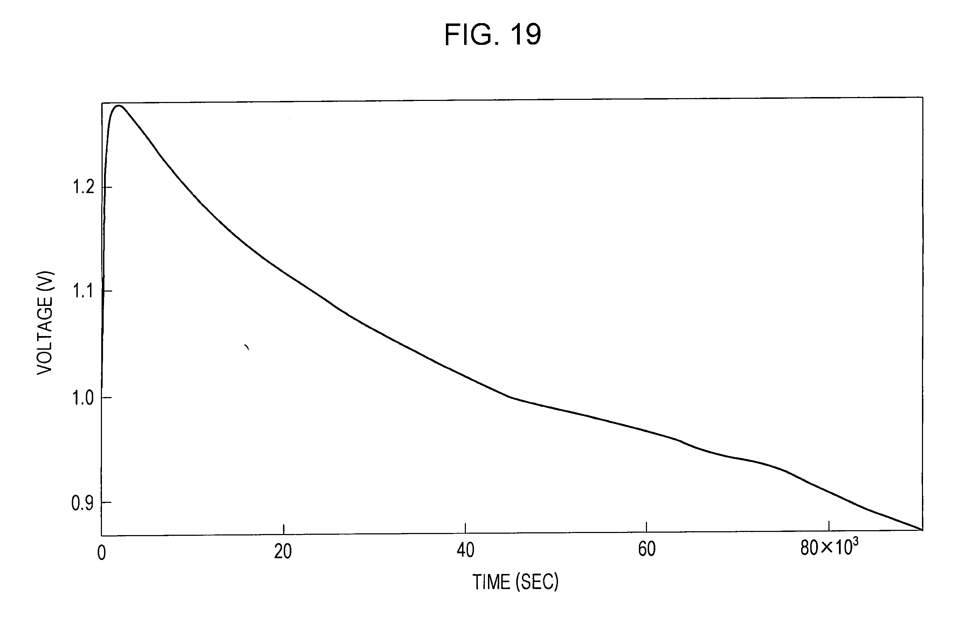

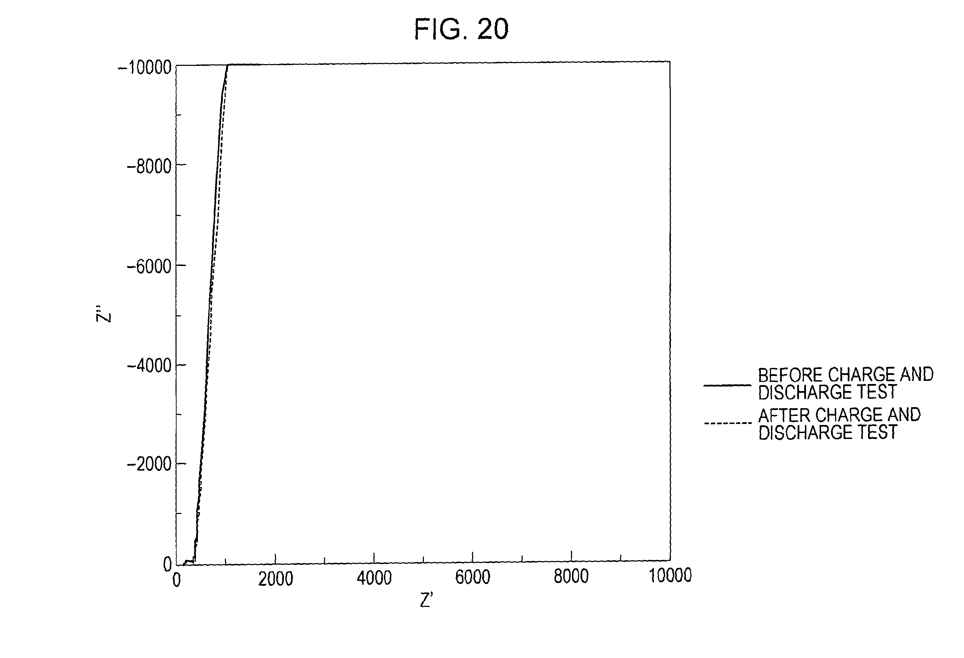

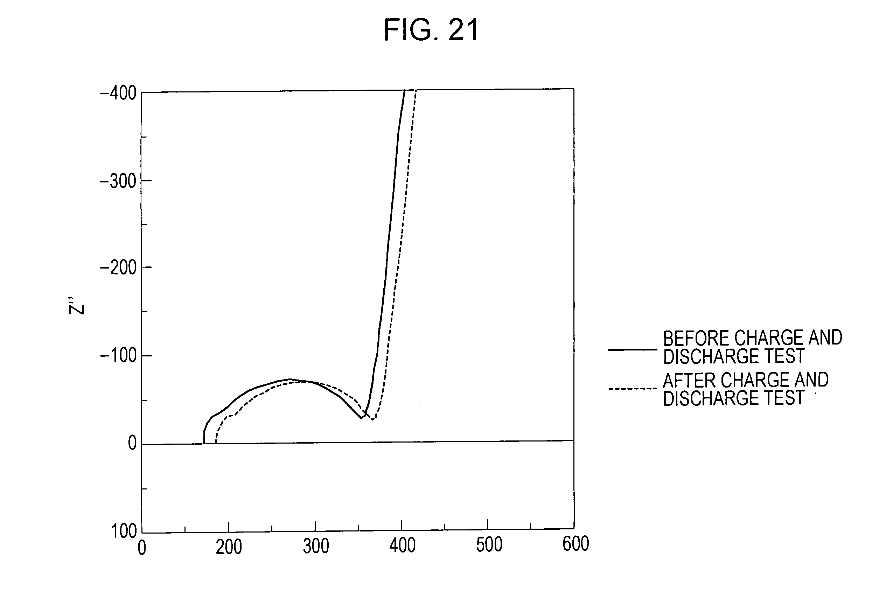

The results of the charge and discharge test are shown in Figs. 16, 17, and 18. In addition, Fig. 18 is an enlarged graph of a charge-and-discharge curve shown by an arrow 102 of Fig. 17. The result of the open-circuit voltage measurement is shown in Fig. 19. The Cole-Cole plots of the results of the impedance measurement are shown in Figs. 20 and 21. In addition, Fig. 21 is an enlarged graph of that shown in Fig. 20.

### <Test Example 1-4>

A laminate having the structure of the substrate 11/lower collector layer 12/interlayer 13/upper collector layer 14 as shown in Fig. 1A was formed as described below.

### [Formation of lower collector layer 12]

First, the lower collector layer 12 was formed on the substrate 11 (glass substrate) using a sputtering apparatus under the following sputtering conditions.

### (Sputtering conditions)

Target: Pt
Pressure: 0.5 Pa
Sputtering gas: Ar: 10 sccm
Output: 50 W
Film-formation time: 10 minutes
Film thickness: 100 nm

### [Formation of interlayer 13]

Next, the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Film-formation time: 6 hours
Output: 300 W
Film thickness: 800 nm

### [Formation of upper collector layer 14]

Next, the upper collector layer 14 was formed on the substrate 11 using a sputtering apparatus under the following sputtering conditions.

### (Sputtering conditions)

Target: Pt
Pressure: 0.5 Pa
Sputtering gas: Ar: 10 sccm
Output: 50 W
Film-formation time: 10 minutes
Film thickness: 100 nm

The (charge and discharge test), the (open-circuit voltage), and the (impedance measurement) were performed on this laminate in a manner similar to that of Test Example 1-1.

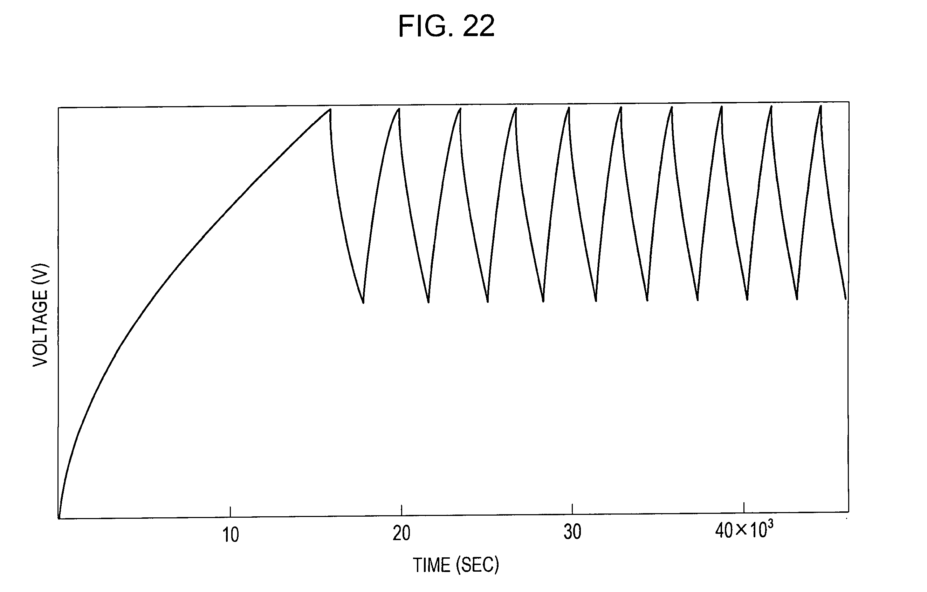

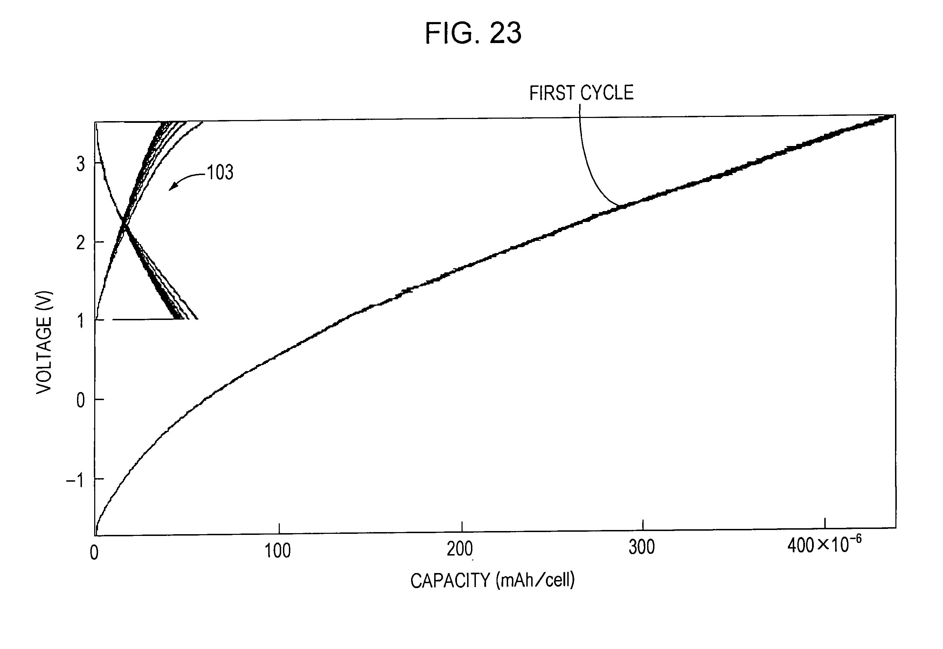

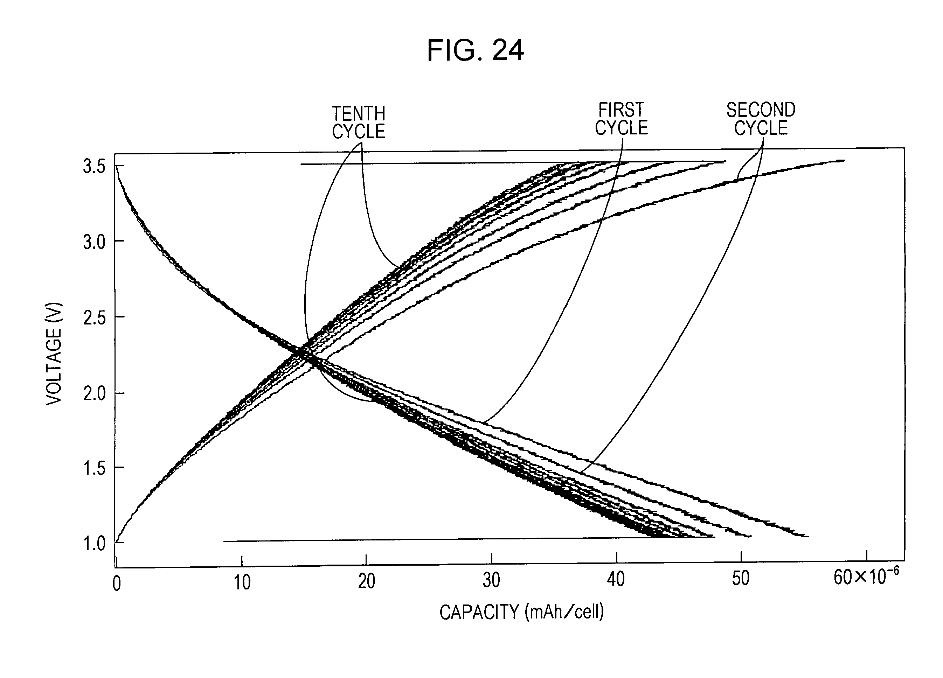

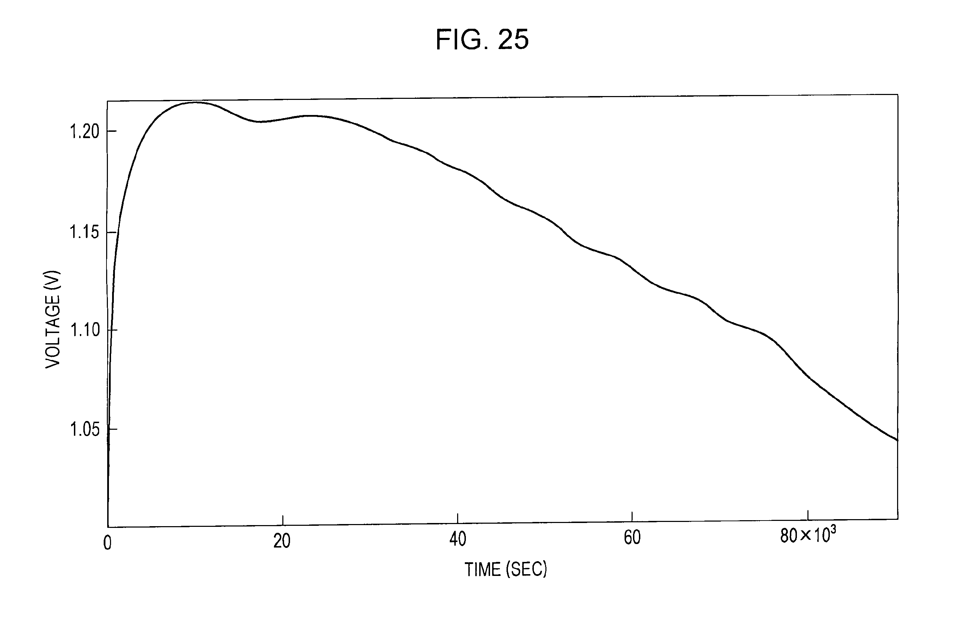

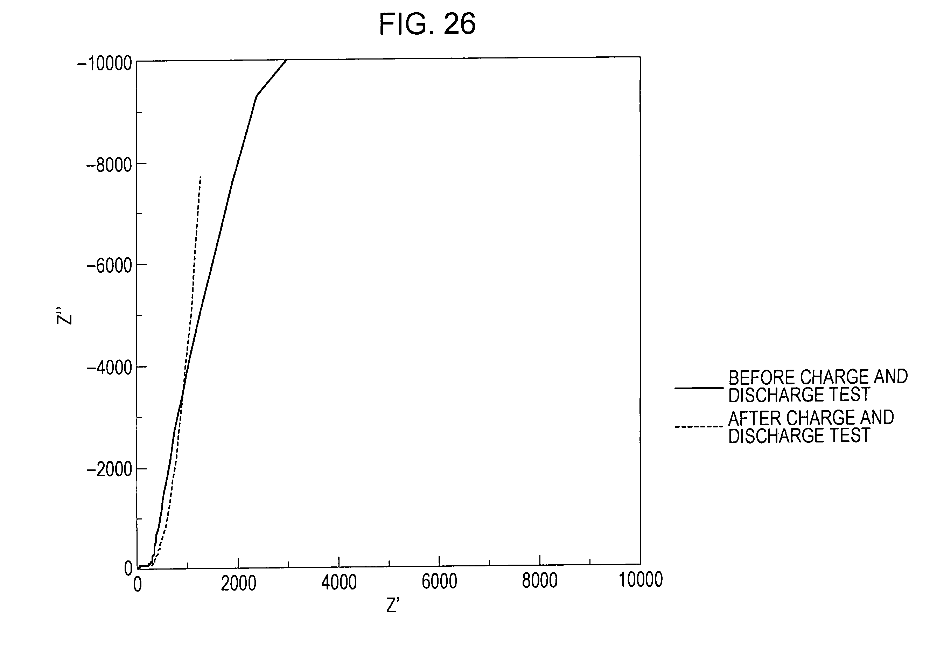

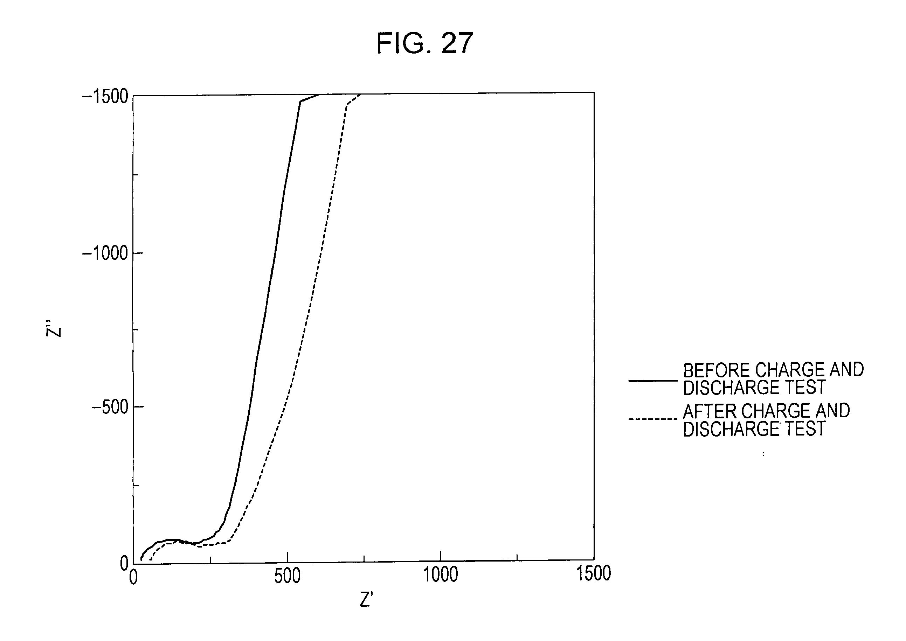

The results of the charge and discharge test are shown in Figs. 22, 23, and 24. In addition, Fig. 24 is an enlarged graph of a charge-and-discharge curve shown by an arrow 103 of Fig. 23. The result of the open-circuit voltage measurement is shown in Fig. 25. The Cole-Cole plots of the results of the impedance measurement are shown in Figs. 26 and 27. In addition, Fig. 27 is an enlarged graph of that shown in Fig. 26.

### [Evaluation]

From Test Examples 1-1 to 1-4, it was confirmed that the laminate as shown in Fig. 1A was able to repeatedly perform charge and discharge operation. In addition, according to the impedance measurement, the behavior before the charge and discharge test was different from that thereafter, and it was confirmed that the state of the interlayer 13 was changed before and after the charge and discharge test.

### [Evaluation of cycle characteristic of each collector material]

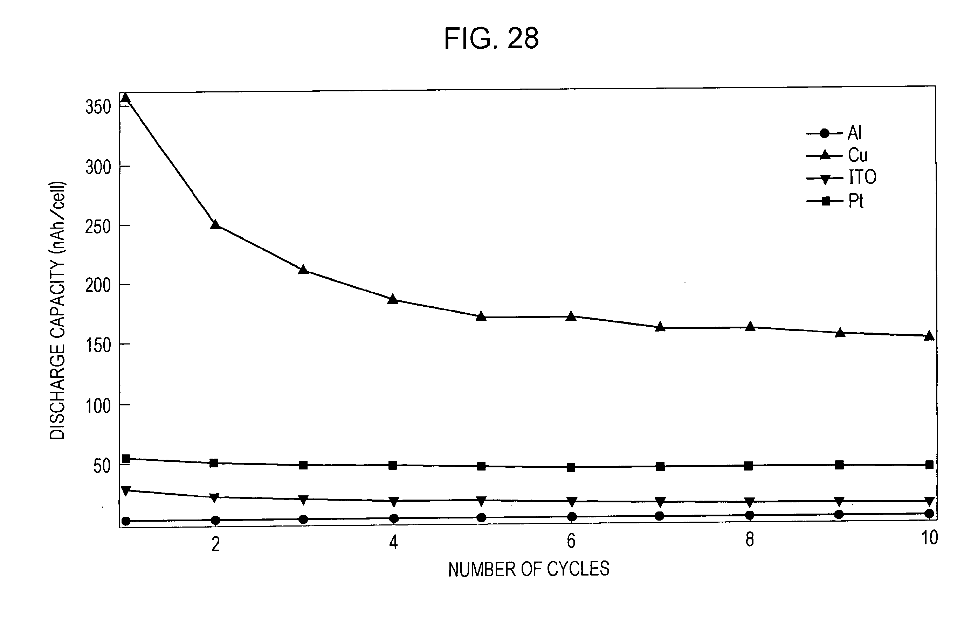

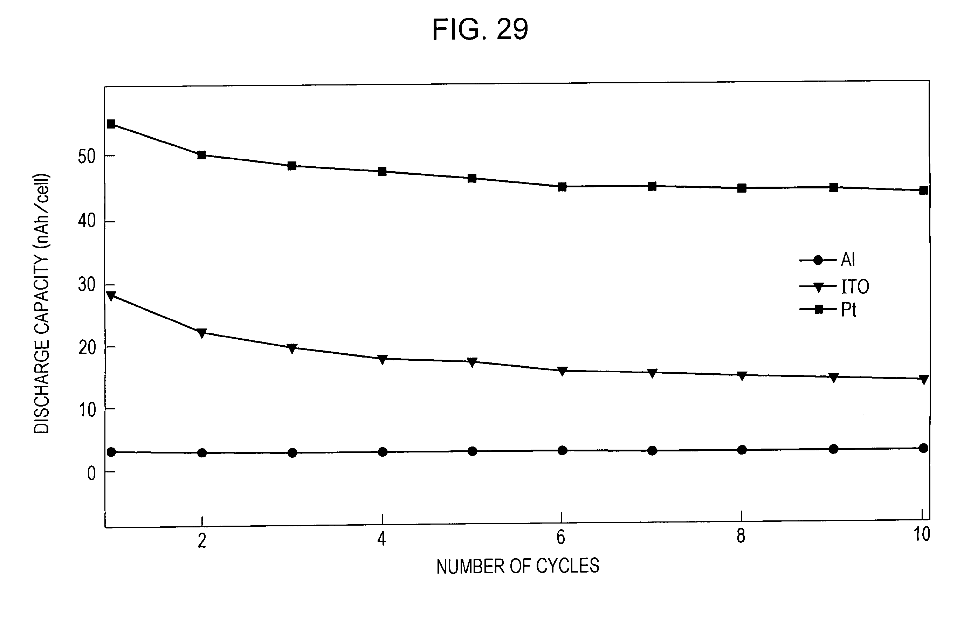

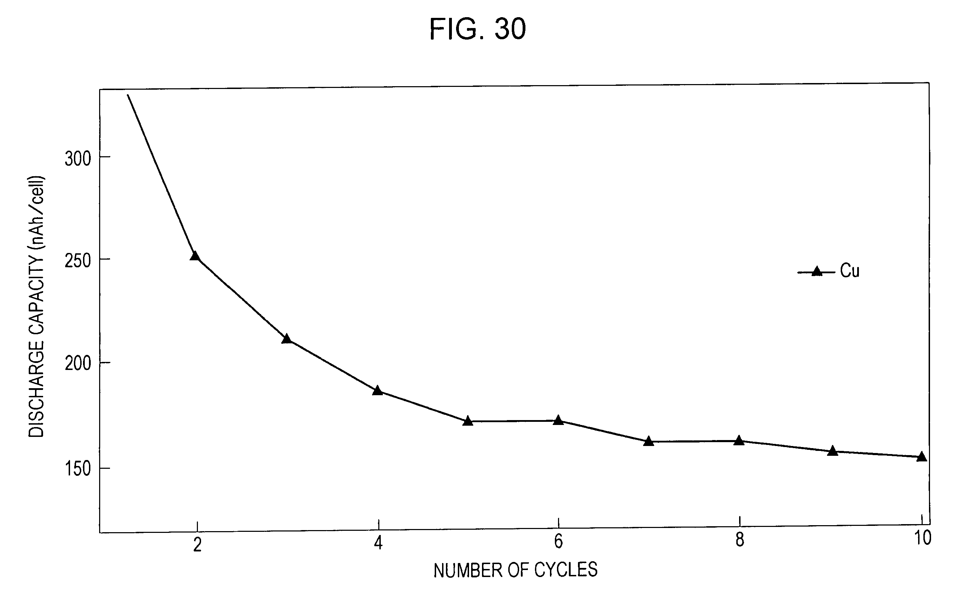

The graphs obtained by plotting the discharge capacity with respect to the number of cycles of each of the collector materials forming the lower collector layer 12 and the upper collector layer 13 are shown in Figs. 28 to 30. In addition, Fig. 29 is a partially enlarged graph of that shown in Fig. 28. Fig. 30 is a partially enlarged graph of that shown in Fig. 28.

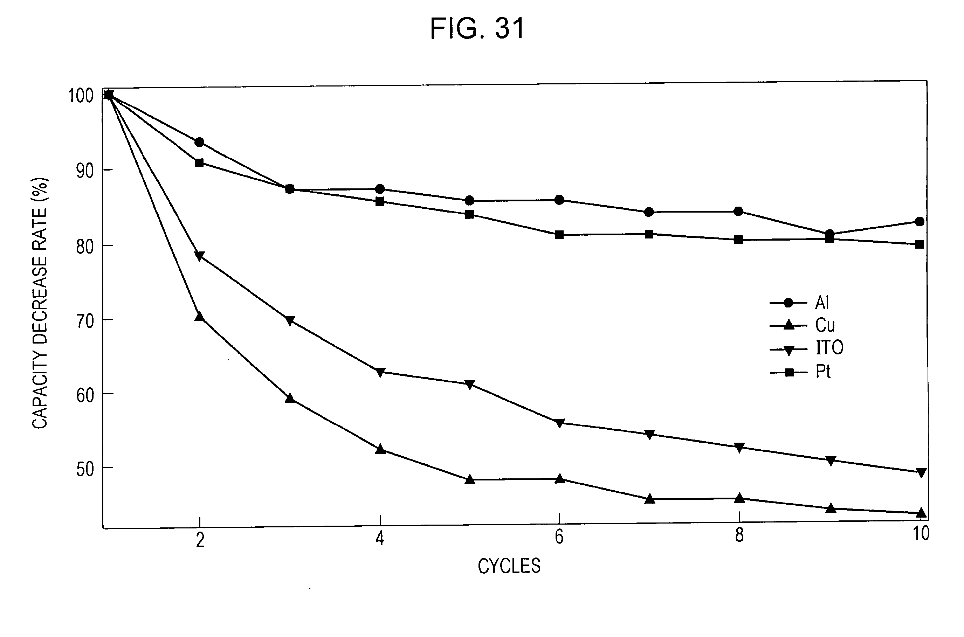

In addition, the graph obtained by plotting a discharge capacity retention rate to the first discharge capacity with respect to the number of cycles is shown in Fig. 31.

As shown in Figs. 28 to 30, it was found that the discharge capacity was changed in accordance with the types of collector materials forming the upper current collector layer 14 and the lower collector layer 12. In particular, it was found that when copper was used, the discharge capacity was high as compared with that of the other materials.

In addition, as shown in Fig. 31, it was found that the discharge capacity retention rate was changed in accordance with the types of collector materials.

### [Test Examples 2-1 to 2-7] (examples in which test was performed using a substrate 11 side as a negative electrode)

### (Test Example 2-1)

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: Al
Pressure: 0.5 Pa
Sputtering gas: Ar: 10 sccm
Output: 50 W
Film-formation time: 15 minutes
Film thickness: 100 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Output: 300 W
Film-formation time: 6 hours
Film thickness: 800 nm

### [Formation of upper collector layer 14]

Next, a thin film to be used as the upper collector layer 14 was formed on the substrate 11 using a sputtering apparatus under the following sputtering conditions.

### (Sputtering conditions)

Target: Al
Pressure: 0.5 Pa
Sputtering gas: Ar: 10 sccm
Output: 50 W
Film-formation time: 15 minutes
Film thickness: 100 nm

The following tests were performed using this laminate.

### (Charge and discharge test)

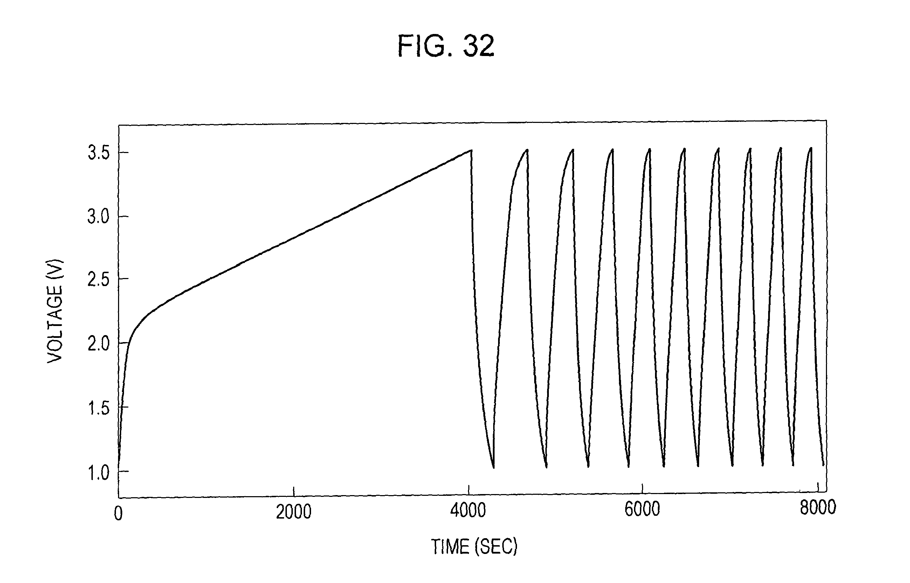

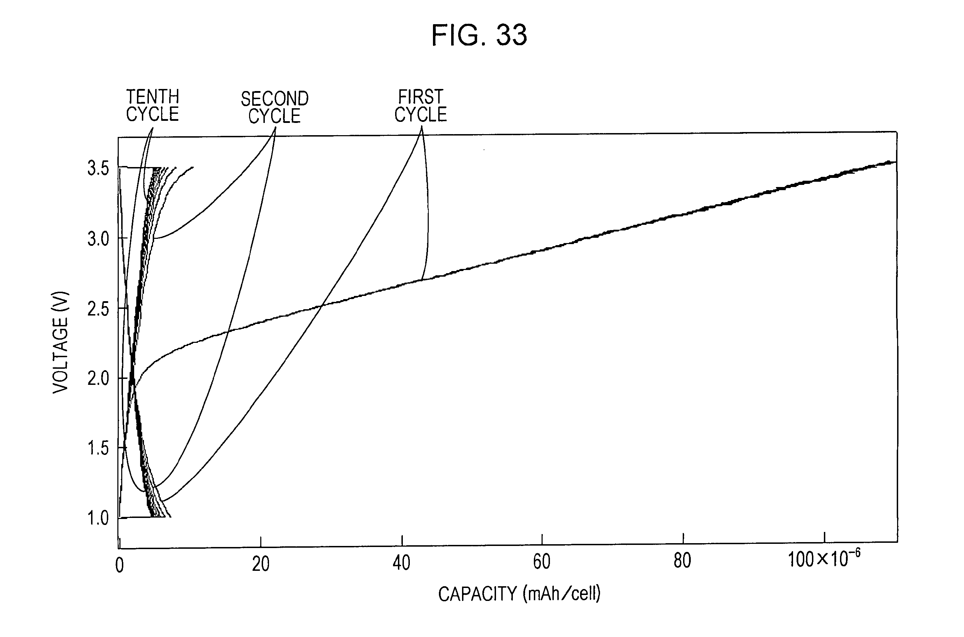

After a + terminal of a power supply was connected to the upper collector layer 14, and a - terminal of the power upper was connected to the lower collector layer 12, a charge and discharge test (number of cycles: 10) was performed at a constant current in such a way that a cut-off voltage of charge was set to 3.5 V, and a cut-off voltage of discharge was set to 1.0 V. In addition, the electric current at the time of charge and discharge was set to 0.1 µA, and the effective area was set to 1 cm × 1 cm (1 cm²). The measurement results are shown in Figs. 32 and 33.

### (Measurement of open-circuit voltage)

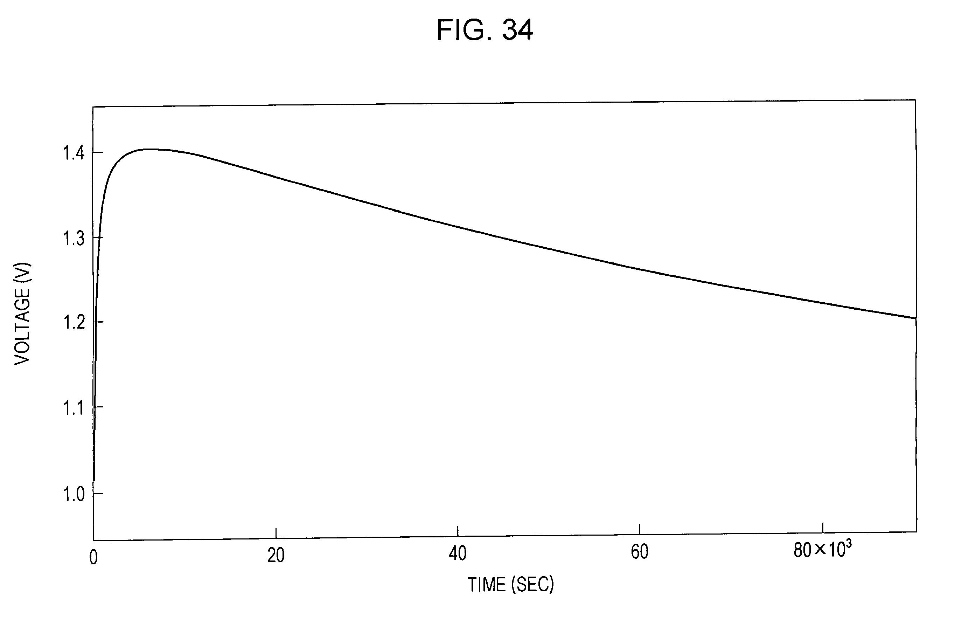

The laminate processed by the charge and discharge test (numbers of cycles: 10) was connected to an electrochemical measuring apparatus manufactured by Solartron, and an open-circuit voltage was monitored for 25 hours. The open-circuit voltage was measured at intervals of 1 minute, and the measurement result is shown in the graph of Fig. 34 in which the horizontal axis represents the time and the vertical axis represents the voltage.

### (Impedance measurement)

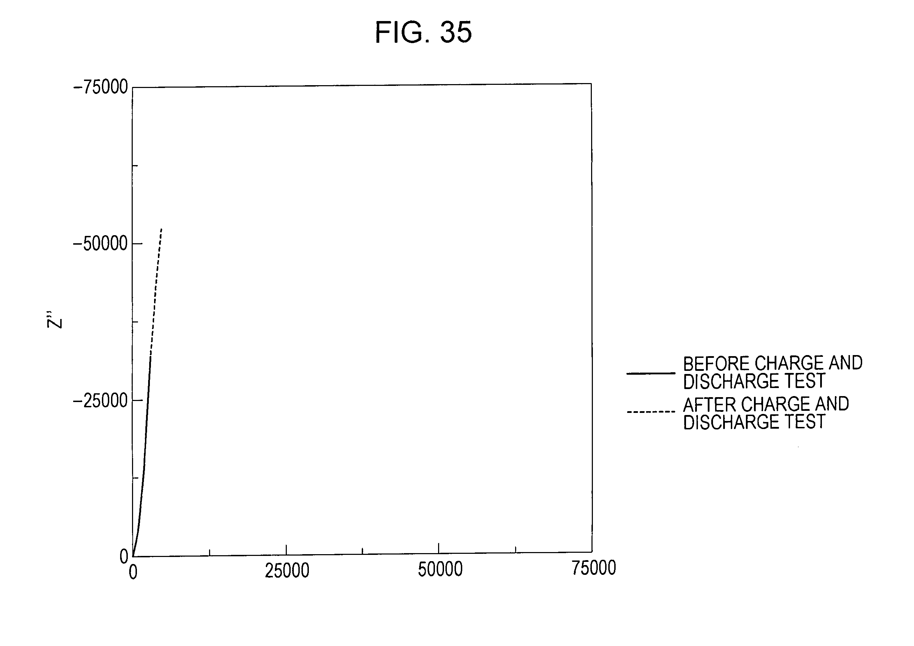

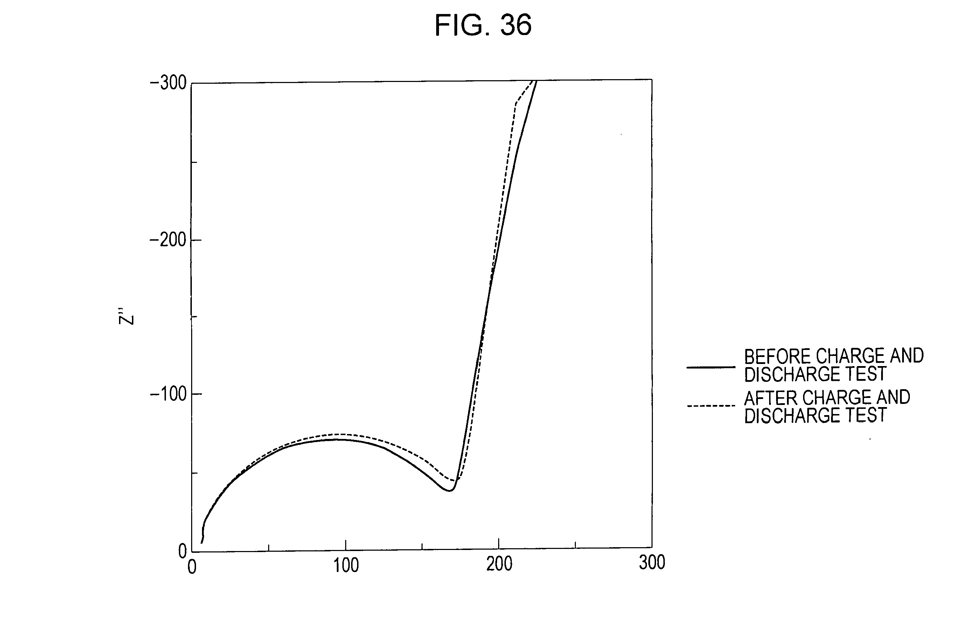

By an alternating-current impedance method, the impedance before and after the first cycle of the charge and discharge test was measured. The Cole-Cole plots of the measurement results are shown in Figs. 35 and 36. In addition, Fig. 36 is an enlarged graph of that shown in Fig. 35.

### <Test Example 2-2>

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: Cu
Pressure: 0.5 Pa
Sputtering gas: Ar: 10 sccm
Output: 50 W
Film-formation time: 8 minutes
Film thickness: 100 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Film-formation time: 6 hours
Output: 300W
Film thickness: 800 nm

### [Formation of upper collector layer 14]

Next, a thin film to be used as the upper collector layer 14 was formed on the substrate 11 using a sputtering apparatus under the following sputtering conditions.

### (Sputtering conditions)

Target: Cu
Pressure: 0.5 Pa
Sputtering gas: Ar: 10 sccm
Output: 50 W
Film-formation time: 8 minutes
Film thickness: 100 nm

The (charge and discharge test), the (open-circuit voltage), and the (impedance measurement) were performed on this laminate in a manner similar to that of Test Example 2-1.

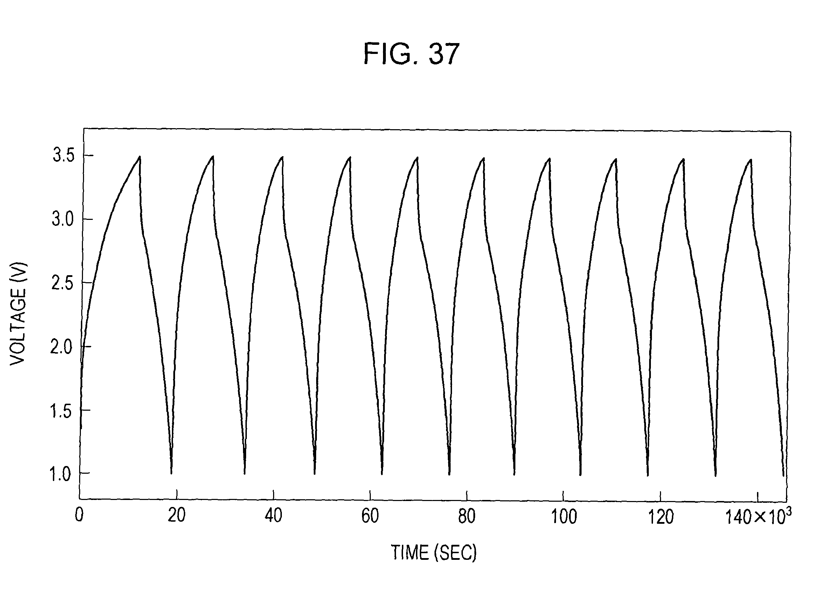

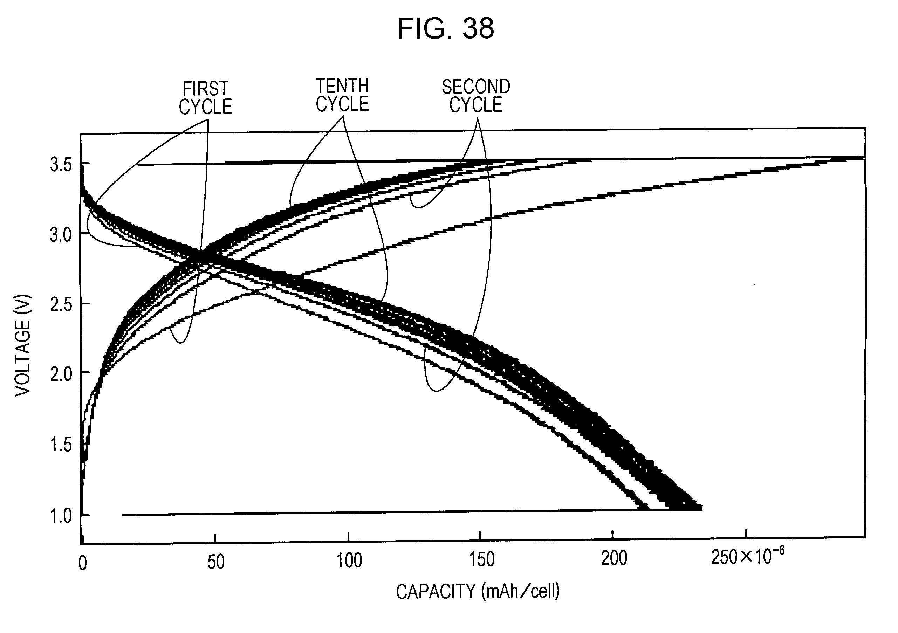

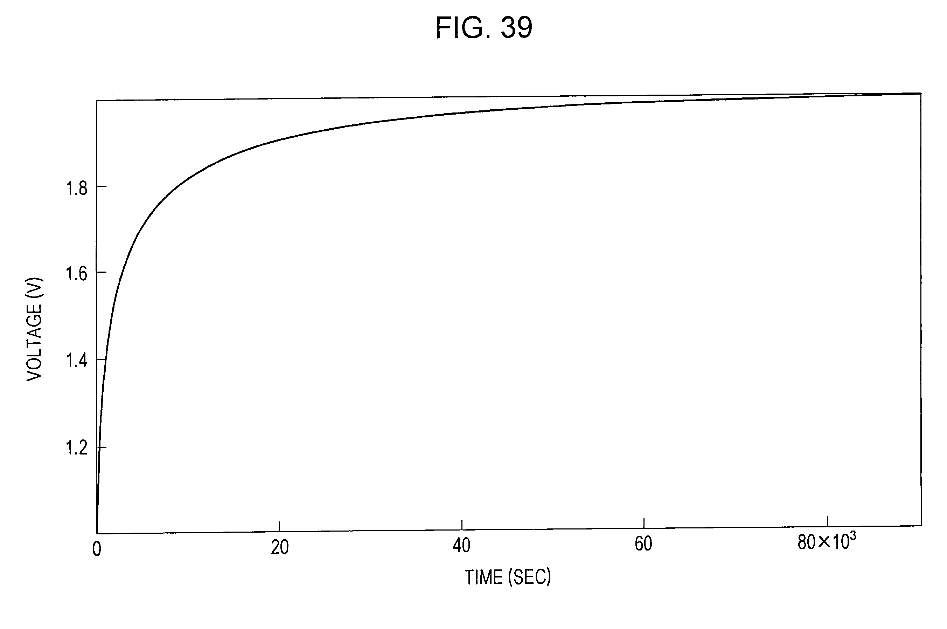

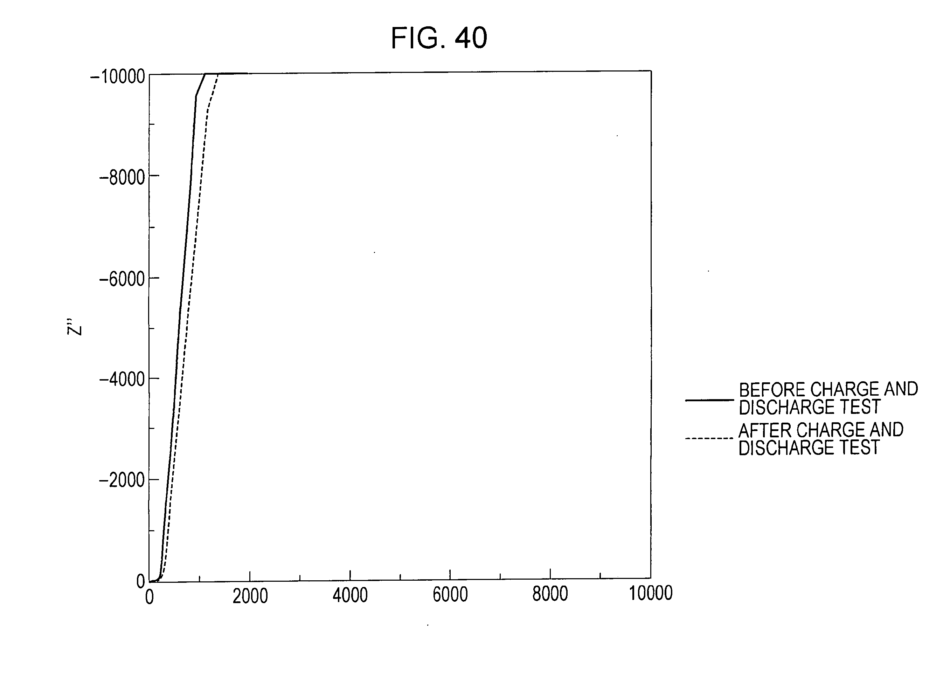

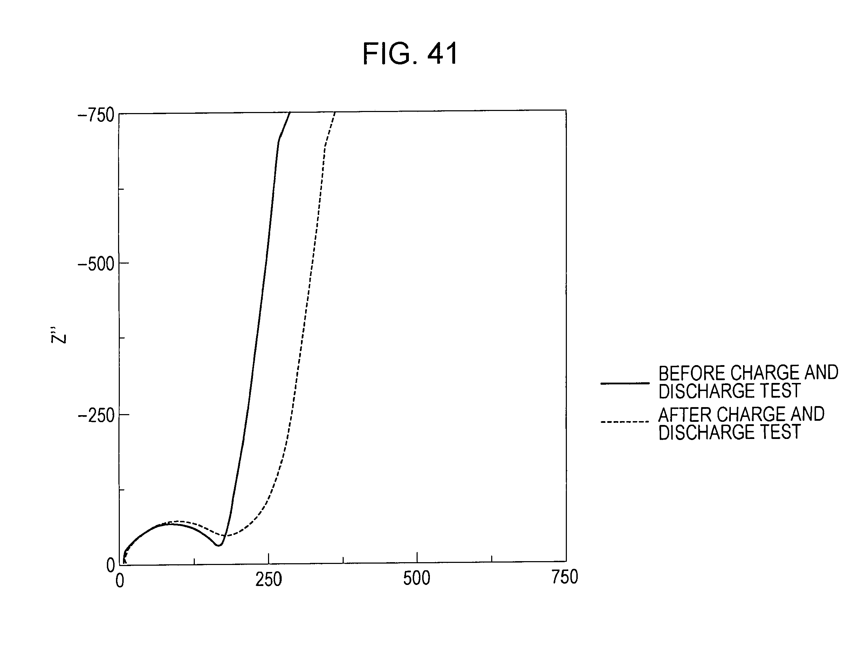

The results of the charge and discharge test are shown in Figs. 37 and 38. The result of the open-circuit voltage measurement is shown in Fig. 39. The Cole-Cole plots of the results of the impedance measurement are shown in Figs. 40 and 41. In addition, Fig. 41 is an enlarged graph of that shown in Fig. 40.

### <Test Example 2-3>

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: ITO
Pressure: 0.5 Pa
Sputtering gas: Ar: 10 sccm
Output: 50 W
Film-formation time: 10 minutes
Film thickness: 100 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Film-formation time: 6 hours
Output: 300 W
Film thickness: 800 nm

### [Formation of upper collector layer 14]

Next, a thin film to be used as the upper collector layer 14 was formed on the substrate 11 using a sputtering apparatus under the following sputtering conditions.

### (Sputtering conditions)

Target: ITO
Pressure: 0.5 Pa
Sputtering gas: Ar: 10 sccm
Output: 50 W
Film-formation time: 10 minutes
Film thickness = 100 nm

The (charge and discharge test), the (open-circuit voltage), and the (impedance measurement) were performed on this laminate in a manner similar to that of Test Example 2-1.

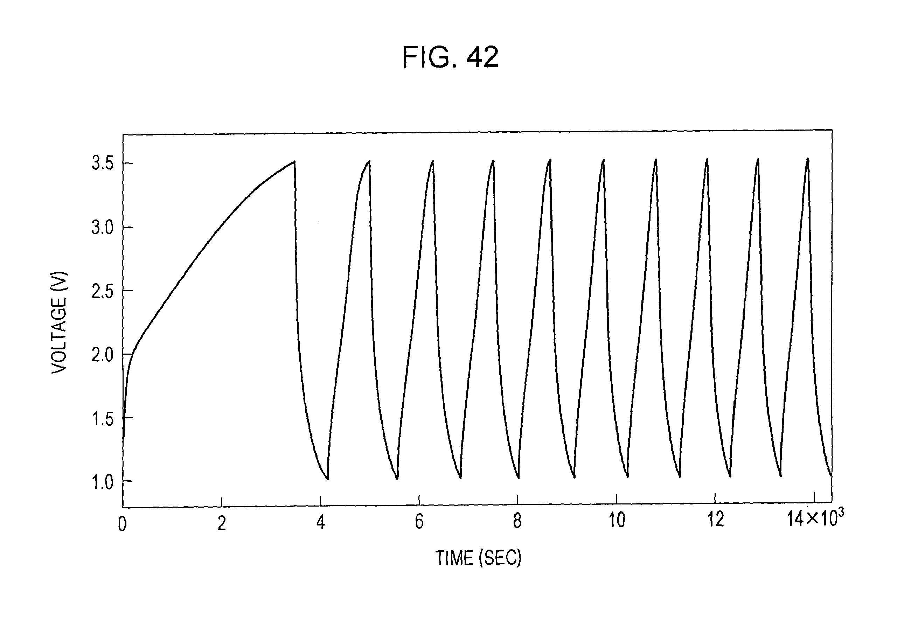

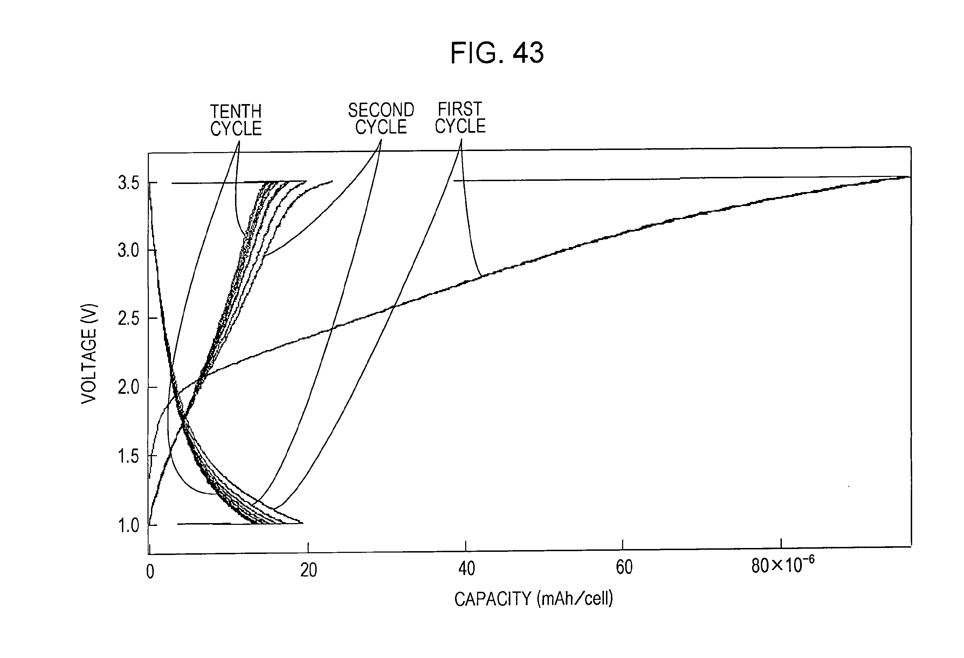

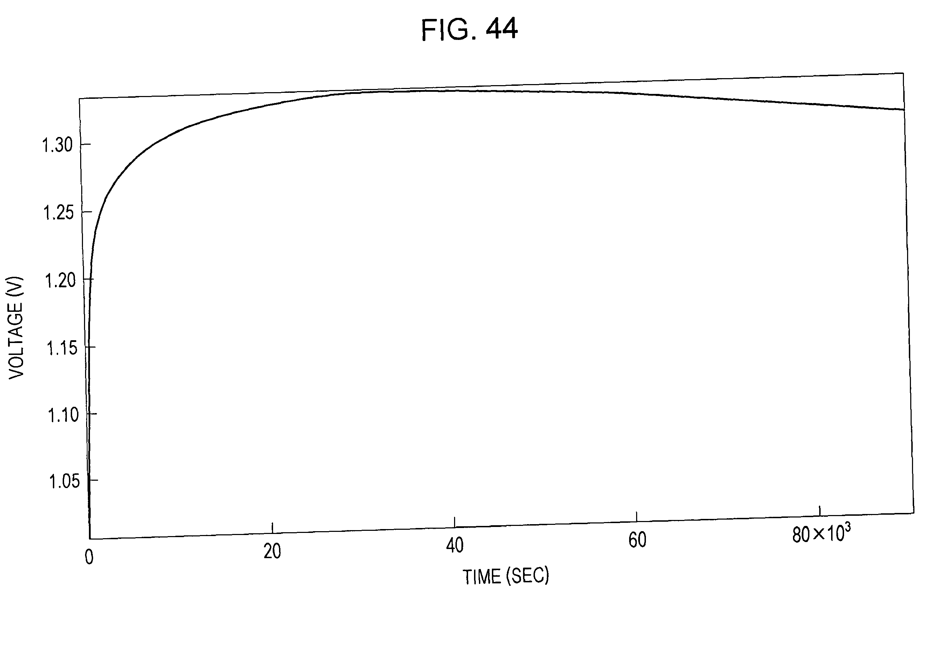

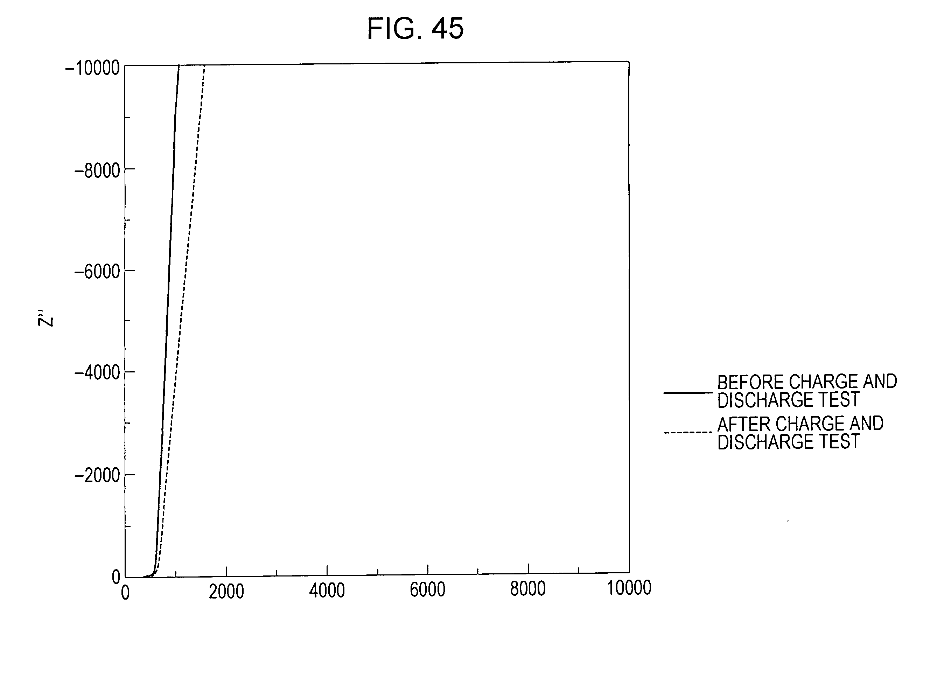

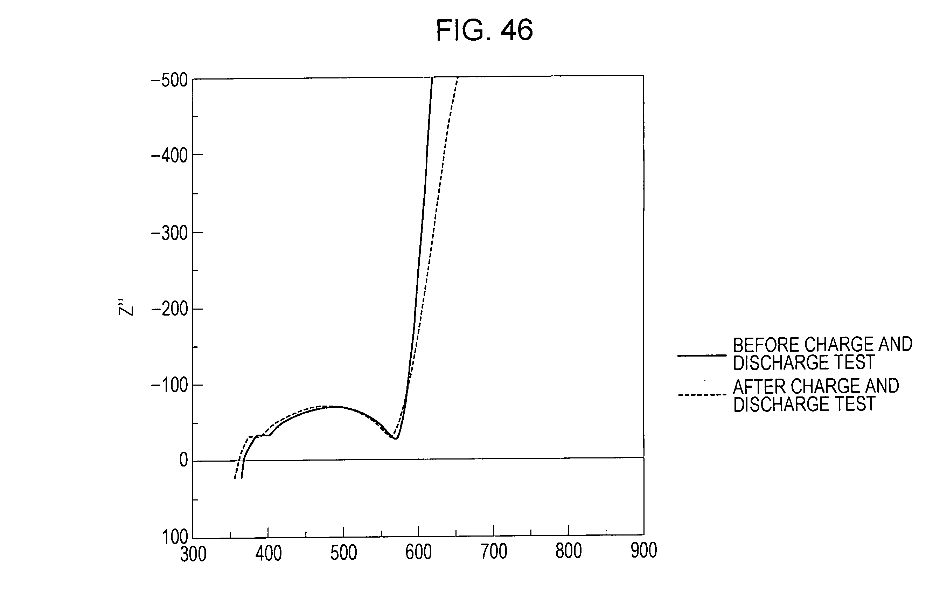

The results of the charge and discharge test are shown in Figs. 42 and 43. The result of the open-circuit voltage measurement is shown in Fig. 44. The Cole-Cole plots of the results of the impedance measurement are shown in Figs. 45 and 46. In addition, Fig. 46 is an enlarged graph of that shown in Fig. 45.

### <Test Example 2-4>

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: Ni
Pressure: 0.5 Pa
Sputtering gas: Ar: 10 sccm
Output: 50 W
Film-formation time: 15 minutes
Film thickness: 100 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Film-formation time: 6 hours
Output: 300 W
Film thickness: 800 nm

### [Formation of upper collector layer 14]

Next, a thin film to be used as the upper collector layer 14 was formed on the substrate 11 using a sputtering apparatus under the following sputtering conditions.

### (Sputtering conditions)

Target: Ni
Pressure: 0.5 Pa
Sputtering gas: Ar: 10 sccm
Output: 50 W
Film-formation time: 15 minutes
Film thickness: 100 nm

The (charge and discharge test), the (open-circuit voltage), and the (impedance measurement) were performed on this laminate in a manner similar to that of Test Example 2-1.

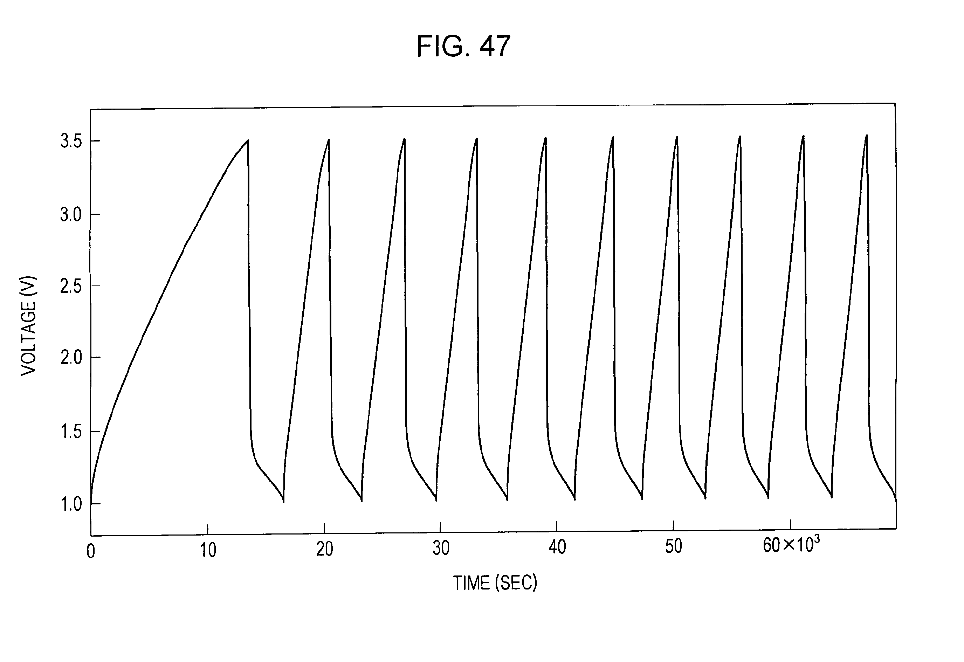

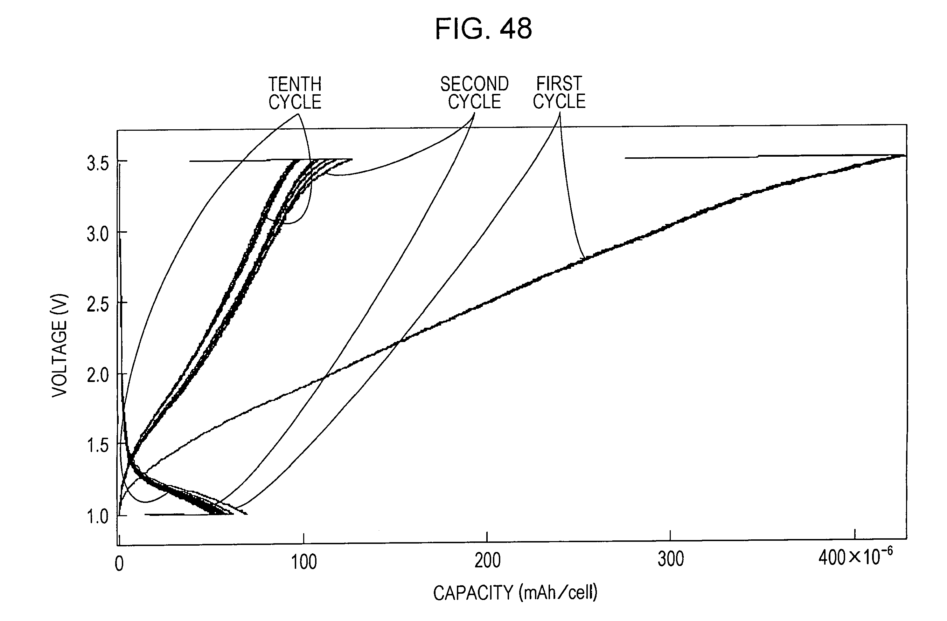

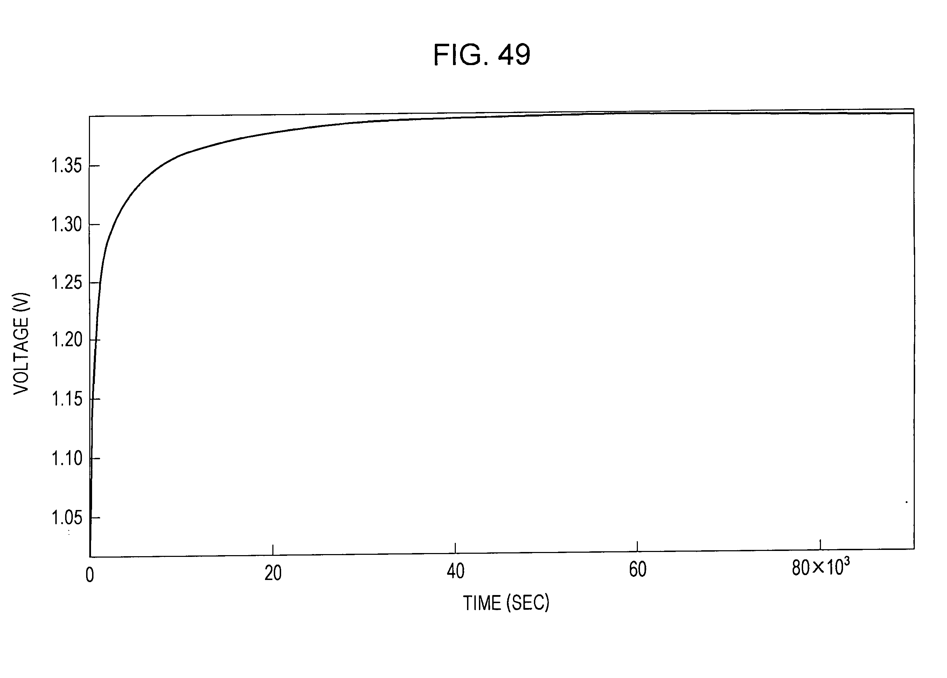

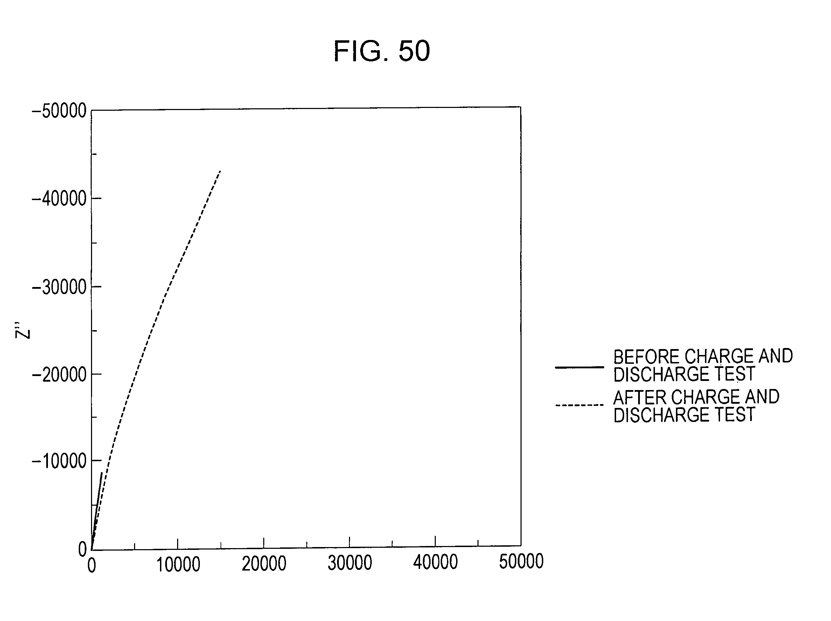

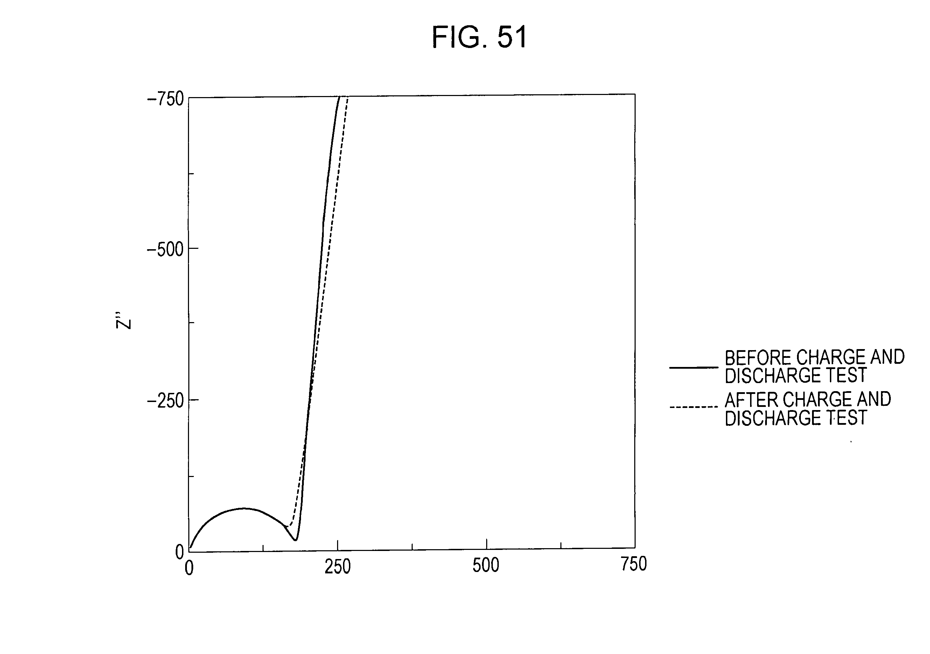

The results of the charge and discharge test are shown in Figs. 47 and 48. The result of the open-circuit voltage measurement is shown in Fig. 49. The Cole-Cole plots of the results of the impedance measurement are shown in Figs. 50 and 51. In addition, Fig. 51 is an enlarged graph of that shown in Fig. 50.

### <Test Example 2-5>

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: Ti
Pressure: 0.5 Pa
Sputtering gas: Ar: 20 sccm
Output: 50 W
Film-formation time: 20 minutes
Film thickness: 100 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Film-formation time: 6 hours
Output: 300 W
Film thickness: 800 nm

### [Formation of upper collector layer 14]

Next, a thin film to be used as the upper collector layer 14 was formed on the substrate 11 using a sputtering apparatus under the following sputtering conditions.

### (Sputtering conditions)

Target: Ti
Pressure: 0.5 Pa
Sputtering gas: Ar: 20 sccm
Output: 50 W
Film-formation time: 20 minutes
Film thickness: 100 nm

The (charge and discharge test), the (open-circuit voltage), and the (impedance measurement) were performed on this laminate in a manner similar to that of Test Example 2-1.

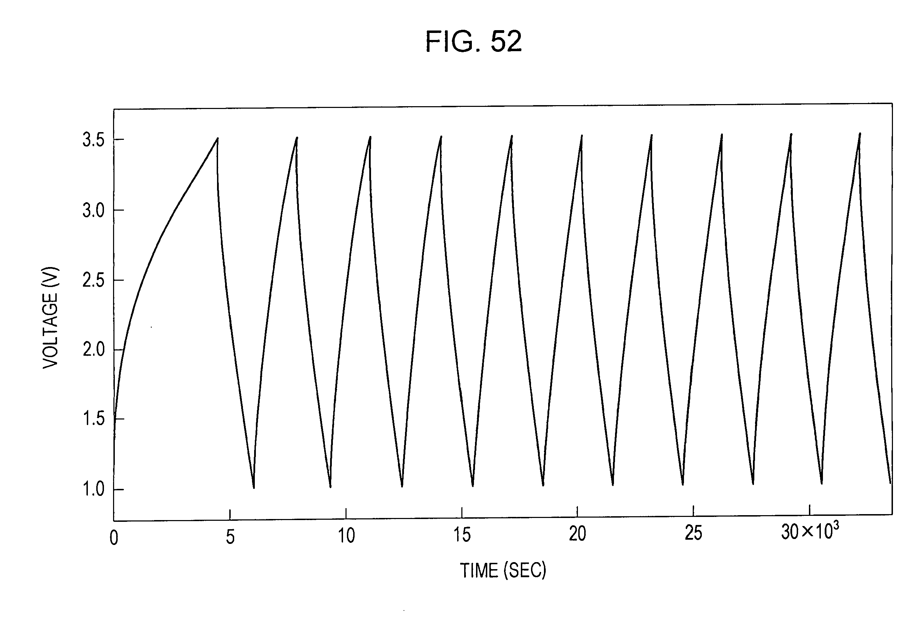

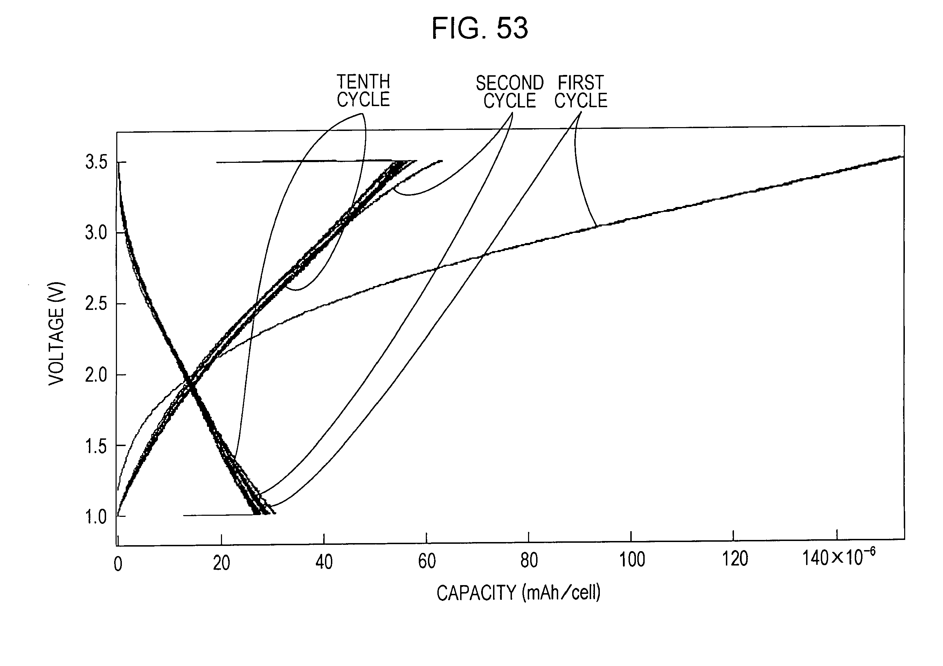

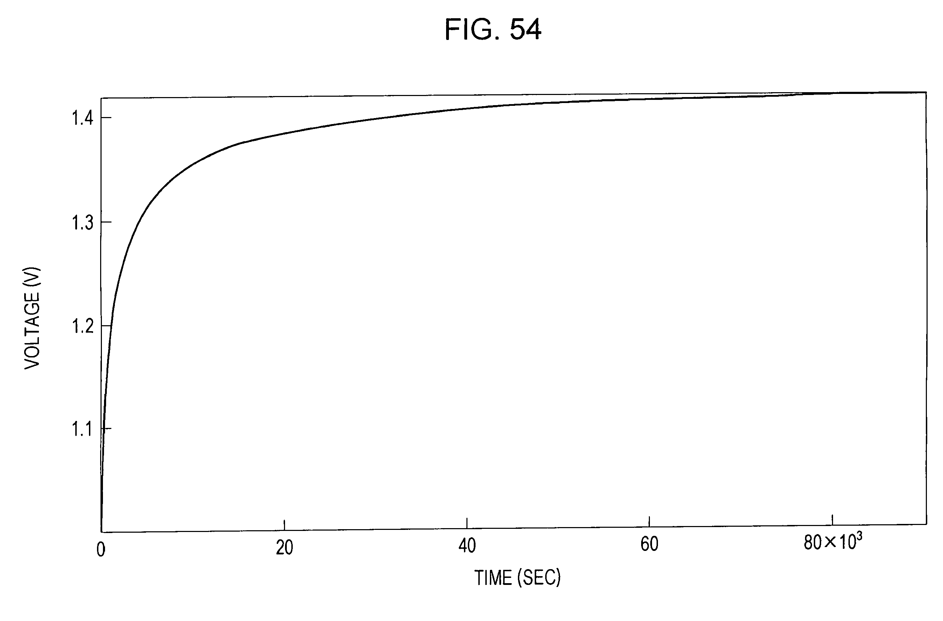

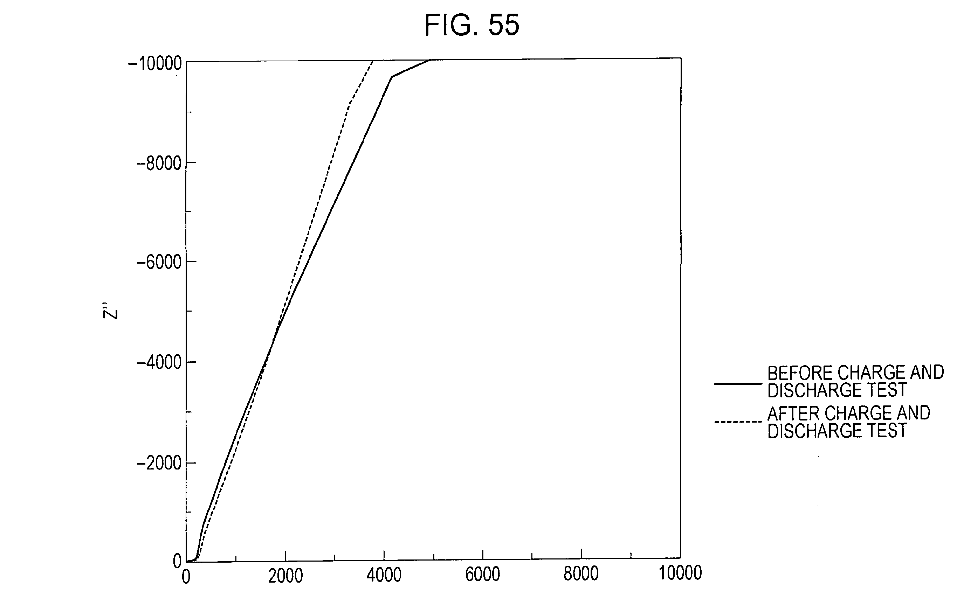

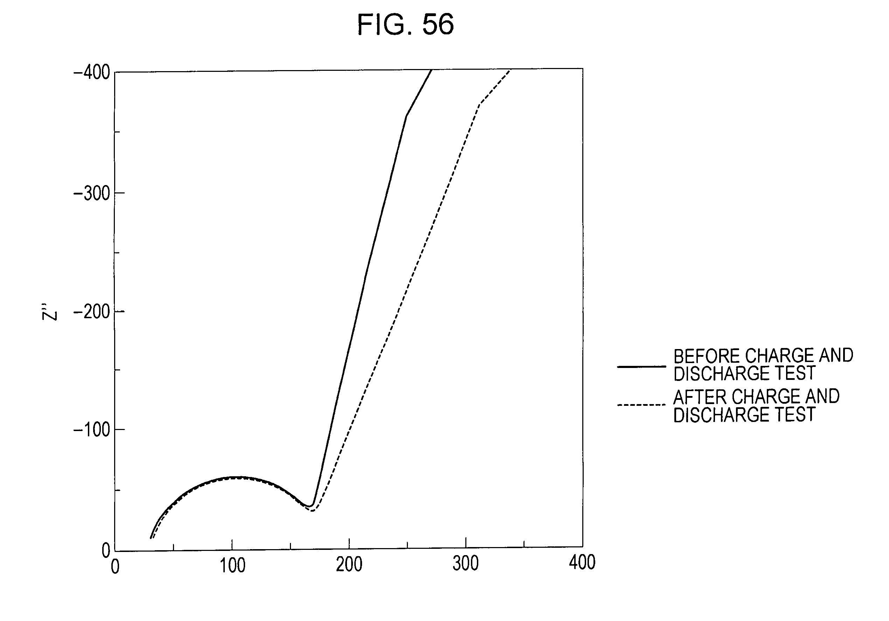

The results of the charge and discharge test are shown in Figs. 52 and 53. The result of the open-circuit voltage measurement is shown in Fig. 54. The Cole-Cole plots of the results of the impedance measurement are shown in Figs. 55 and 56. In addition, Fig. 56 is an enlarged graph of that shown in Fig. 55.

### <Test Example 2-6>

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: Pt
Pressure: 0.5 Pa
Sputtering gas: Ar: 20 sccm
Output: 50 W
Film-formation time: 10 minutes
Film thickness 100 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Film-formation time: 6 hours
Output: 300 W
Film thickness: 800 nm

### [Formation of upper collector layer 14]

Next, a thin film to be used as the upper collector layer 14 was formed on the substrate 11 using a sputtering apparatus under the following sputtering conditions.

### (Sputtering conditions)

Target: Pt
Pressure: 0.5 Pa
Sputtering gas: Ar: 20 sccm
Output: 50 W
Film-formation time: 10 minutes
Film thickness: 100 nm

The (charge and discharge test), the (open-circuit voltage), and the (impedance measurement) were performed on this laminate in a manner similar to that of Test Example 2-1.

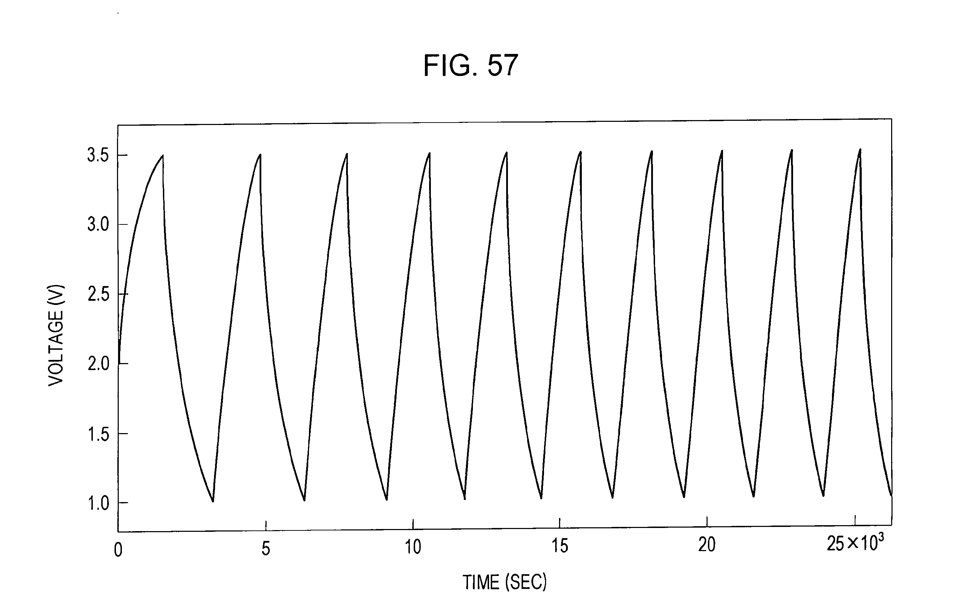

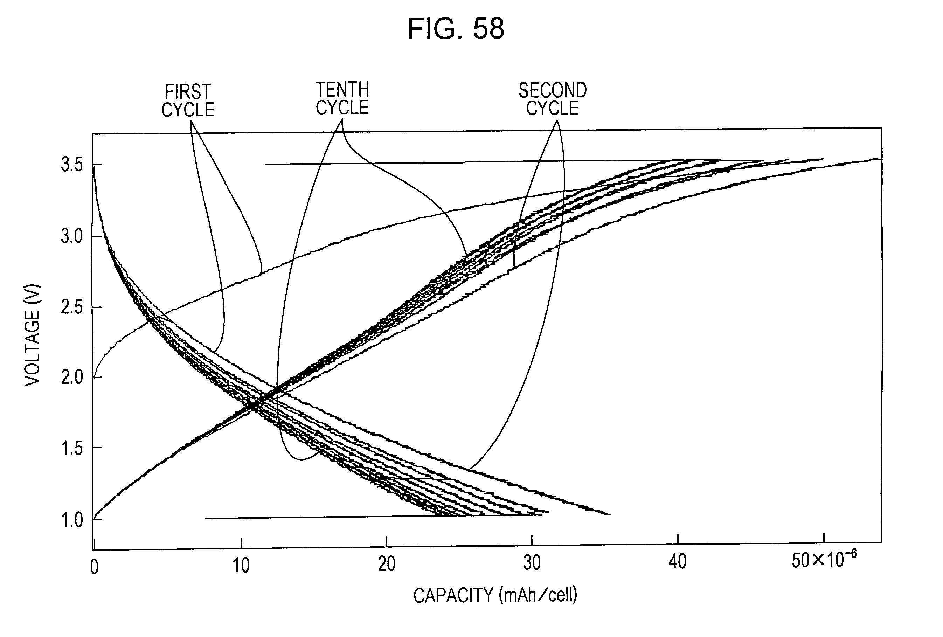

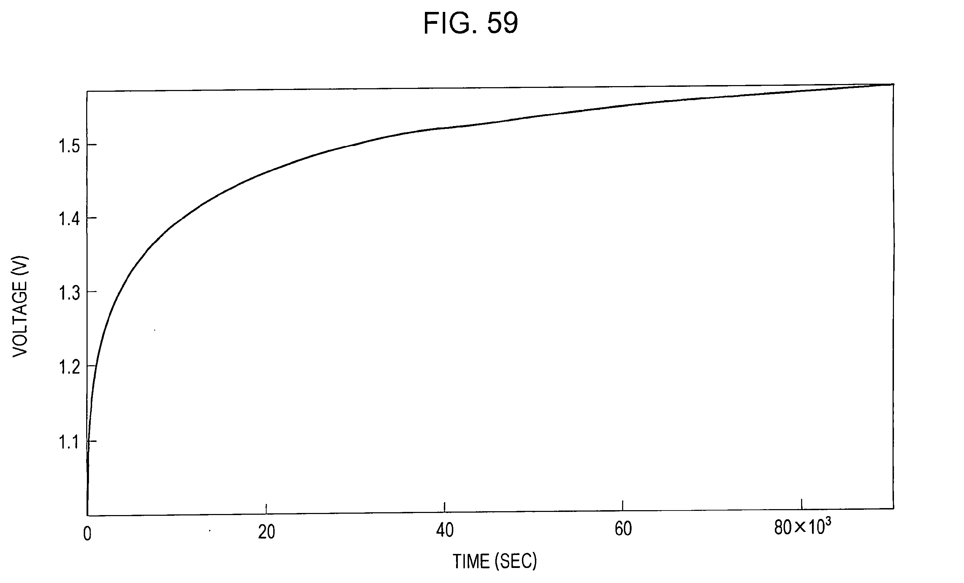

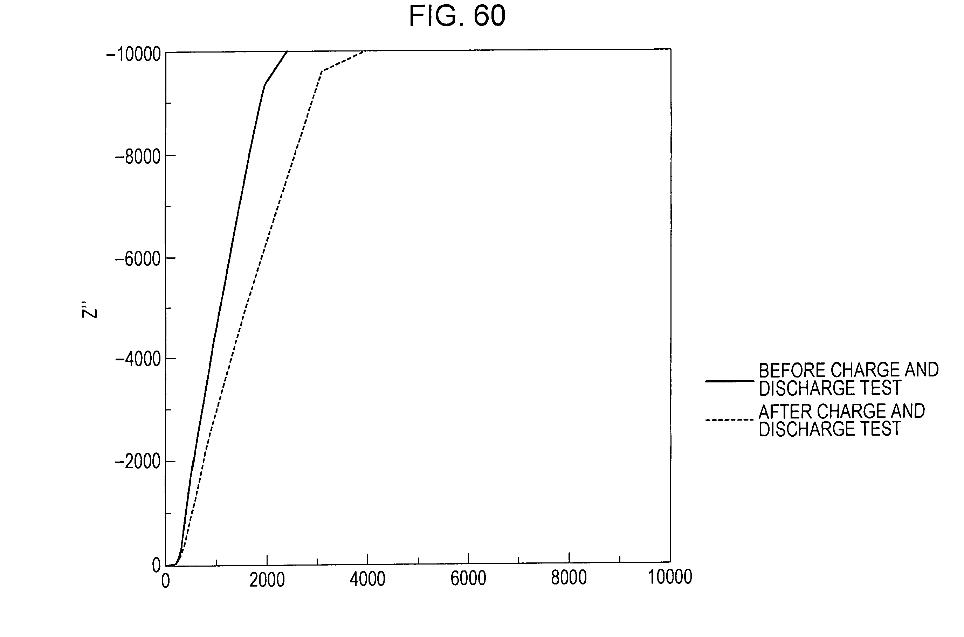

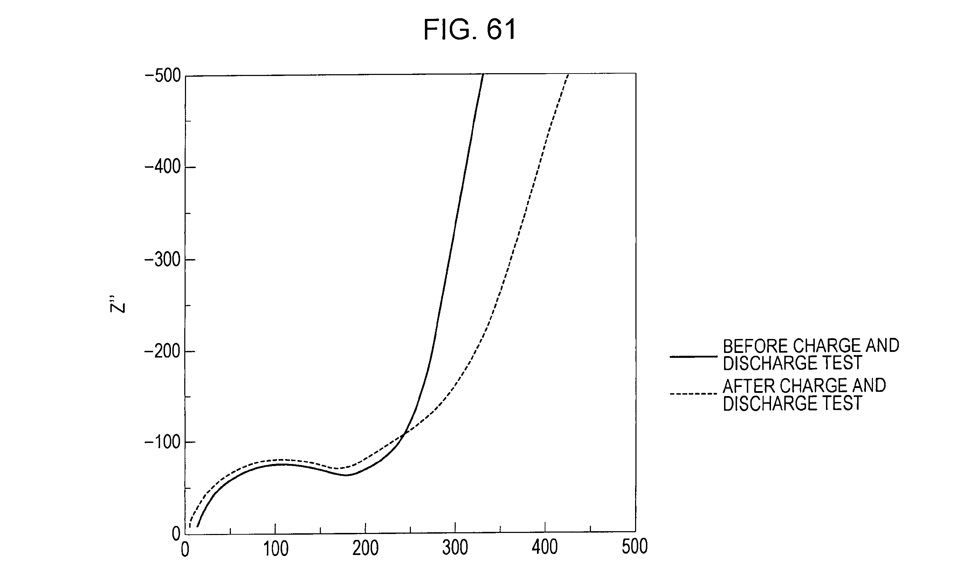

The results of the charge and discharge test are shown in Figs. 57 and 58. The result of the open-circuit voltage measurement is shown in Fig. 59. The Cole-Cole plots of the results of the impedance measurement are shown in Figs. 60 and 61. In addition, Fig. 61 is an enlarged graph of that shown in Fig. 60.

### <Test Example 2-7>

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: C
Pressure: 0.5 Pa
Sputtering gas: Ar: 20 sccm
Output: 50 W
Film-formation time: 150 minutes
Film thickness: 100 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Film-formation time: 6 hours
Output: 300 W
Film thickness: 800 nm

### [Formation of upper collector layer 14]

Next, a thin film to be used as the upper collector layer 14 was formed on the substrate 11 using a sputtering apparatus under the following sputtering conditions.

### (Sputtering conditions)

Target: C
Pressure: 0.5 Pa
Sputtering gas: Ar: 20 sccm
Output: 50 W
Film-formation time: 150 minutes
Film thickness: 100 nm

The (charge and discharge test), the (open-circuit voltage), and the (impedance measurement) were performed on this laminate in a manner similar to that of Test Example 2-1.

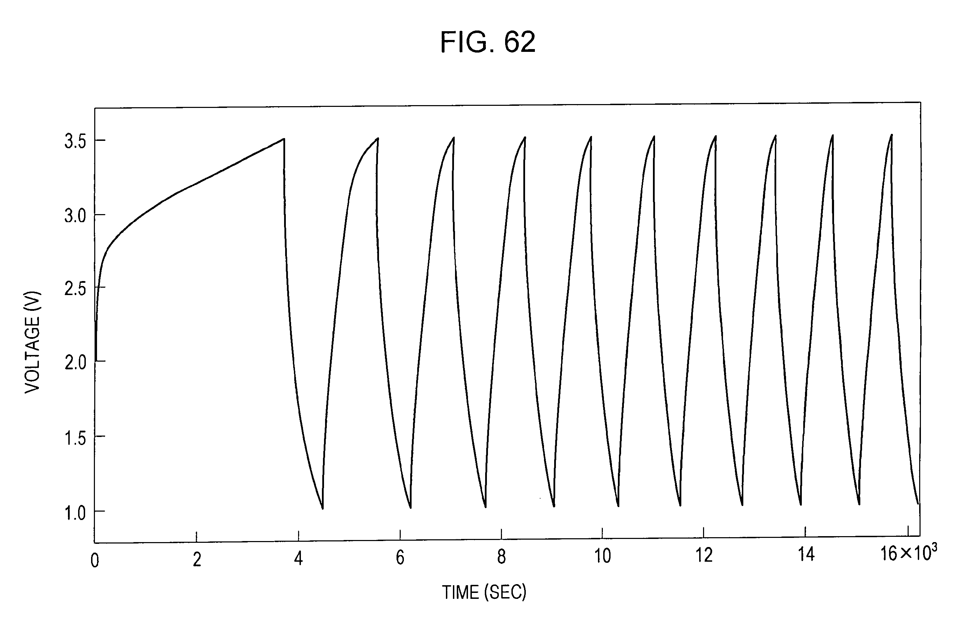

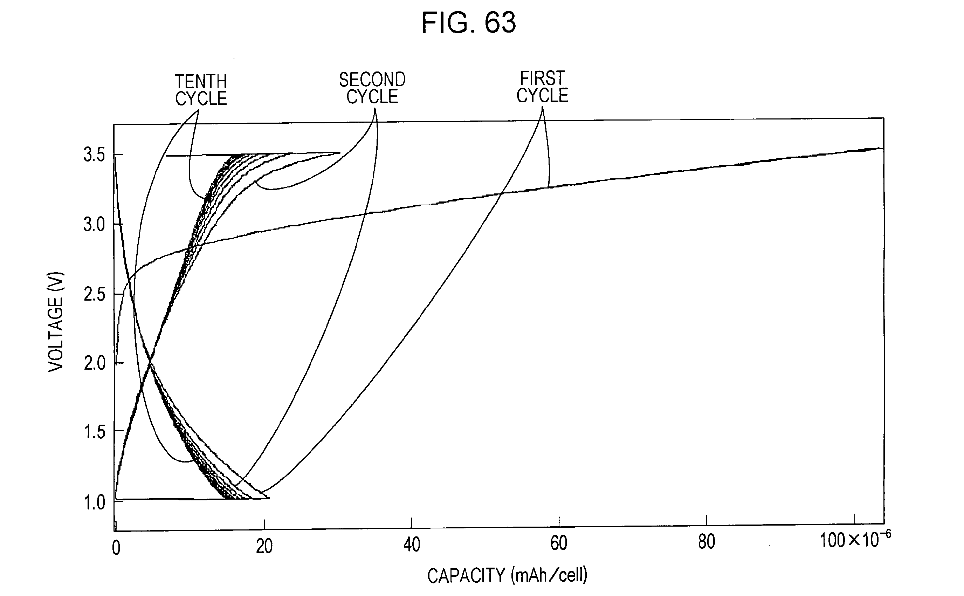

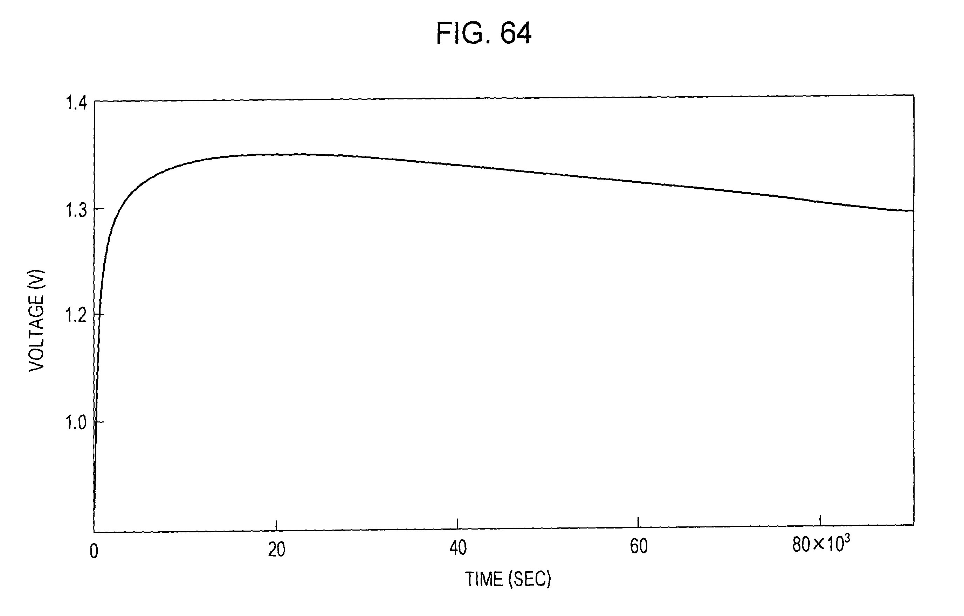

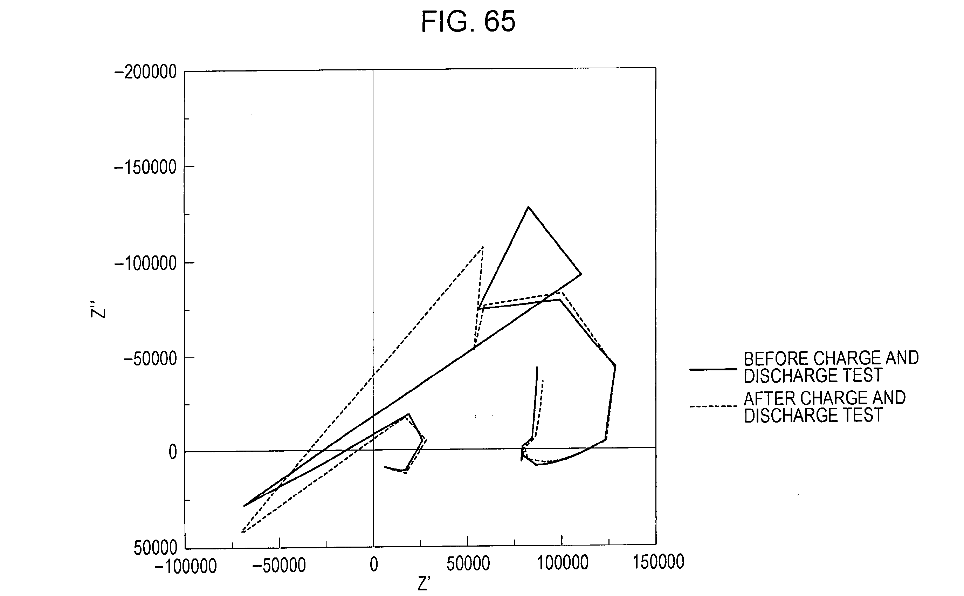

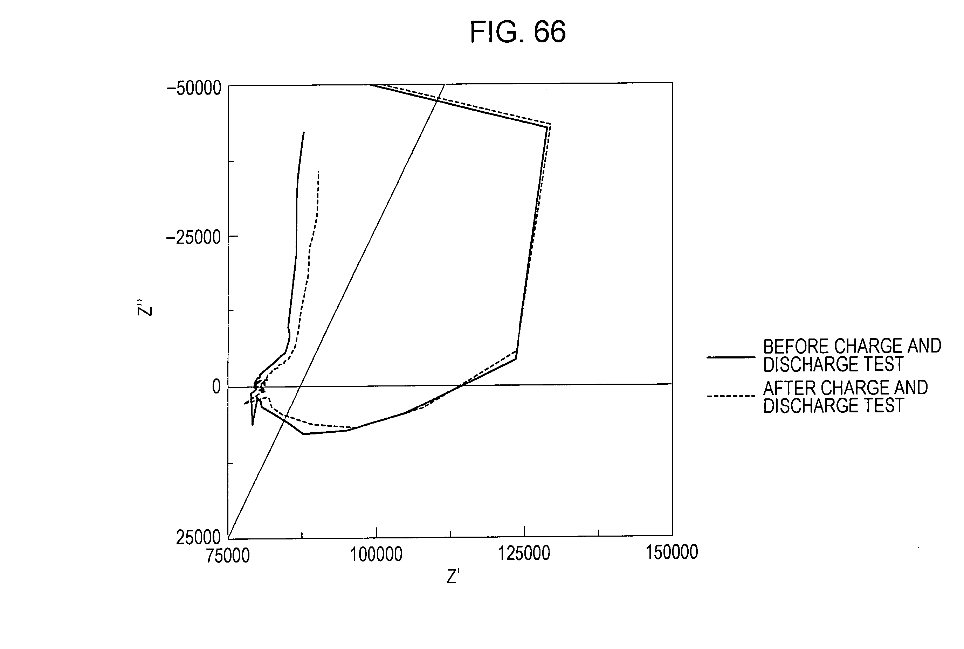

The results of the charge and discharge test are shown in Figs. 62 and 63. The result of the open-circuit voltage measurement is shown in Fig. 64. The Cole-Cole plots of the results of the impedance measurement are shown in Figs. 65 and 66. In addition, Fig. 66 is an enlarged graph of that shown in Fig. 65.

### [Evaluation]

From Test Examples 2-1 to 2-7, it was confirmed that the laminate as shown in Fig. 1A was able to repeatedly perform charge and discharge operation. In addition, according to the impedance measurement, the behavior before the charge and discharge test was different from that thereafter, and it was confirmed that the state of the interlayer 13 was changed before and after the charge and discharge test.

### [Evaluation of cycle characteristic of each collector material]

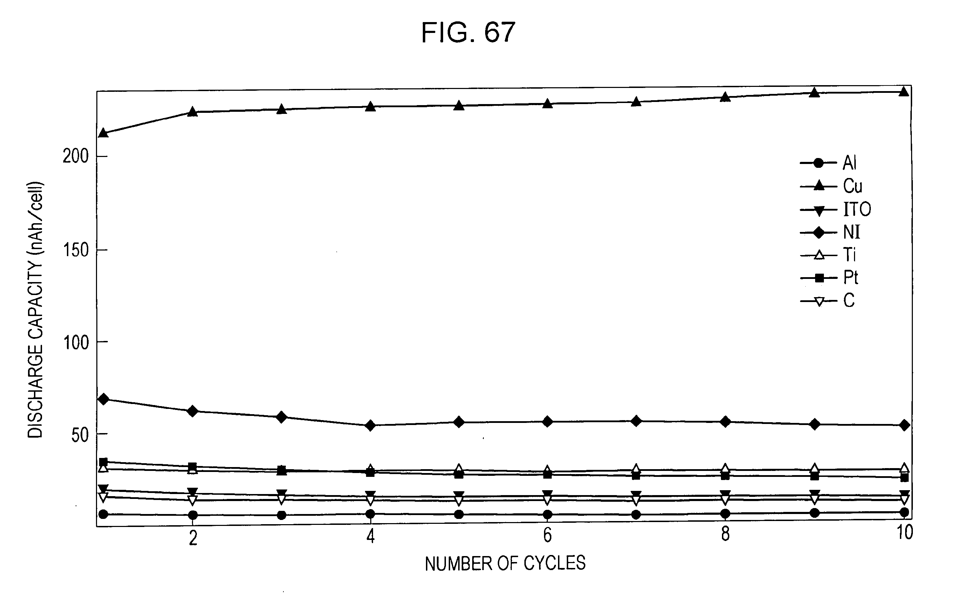

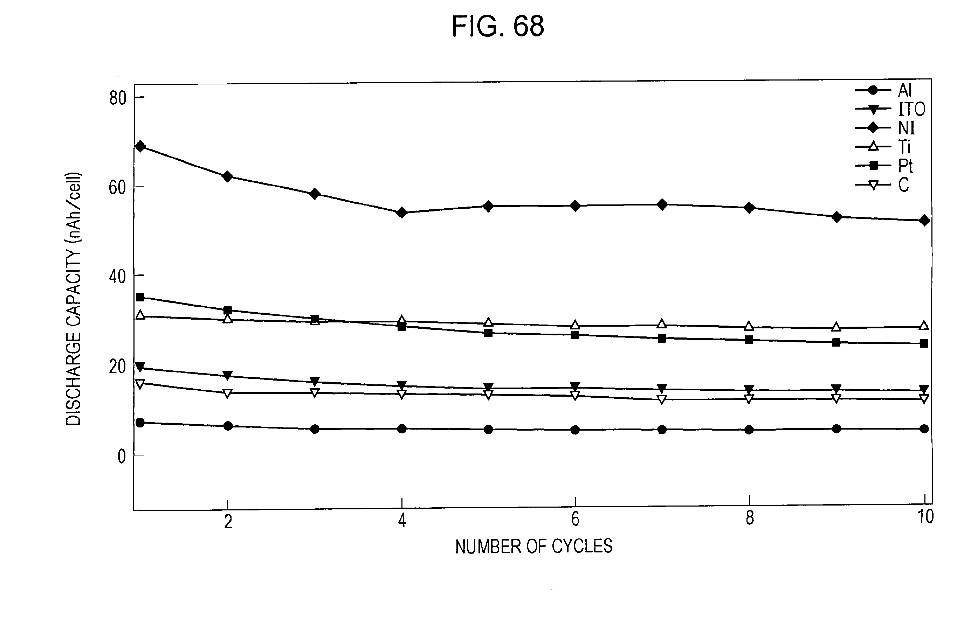

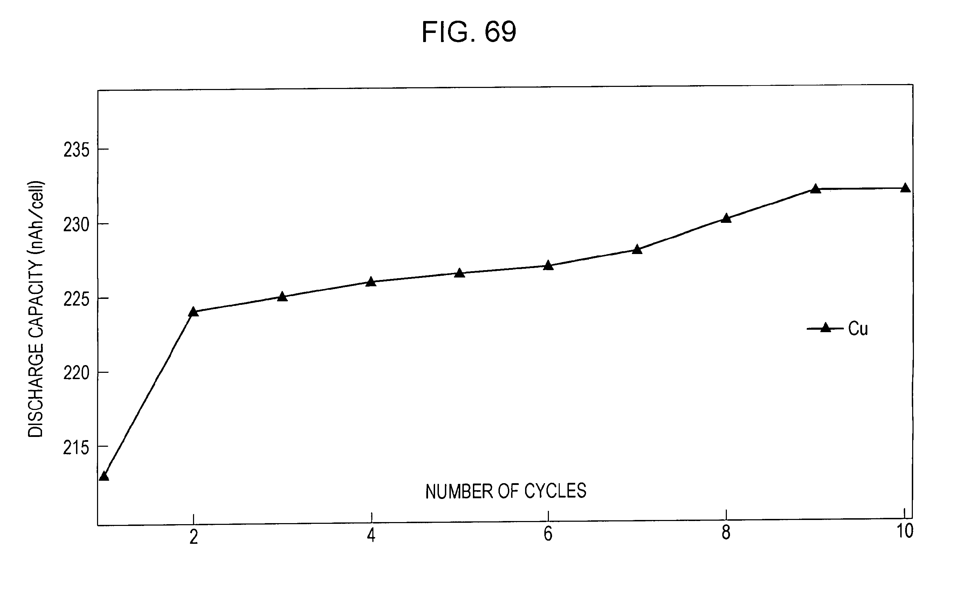

The graphs obtained by plotting the discharge capacity with respect to the number of cycles of each of the collector materials forming the lower collector layer 12 and the upper collector layer 14 are shown in Figs. 67 to 69. In addition, Fig. 68 is an enlarged graph of that shown in Fig. 67. Fig. 69 is an enlarged graph of that shown in Fig. 67.

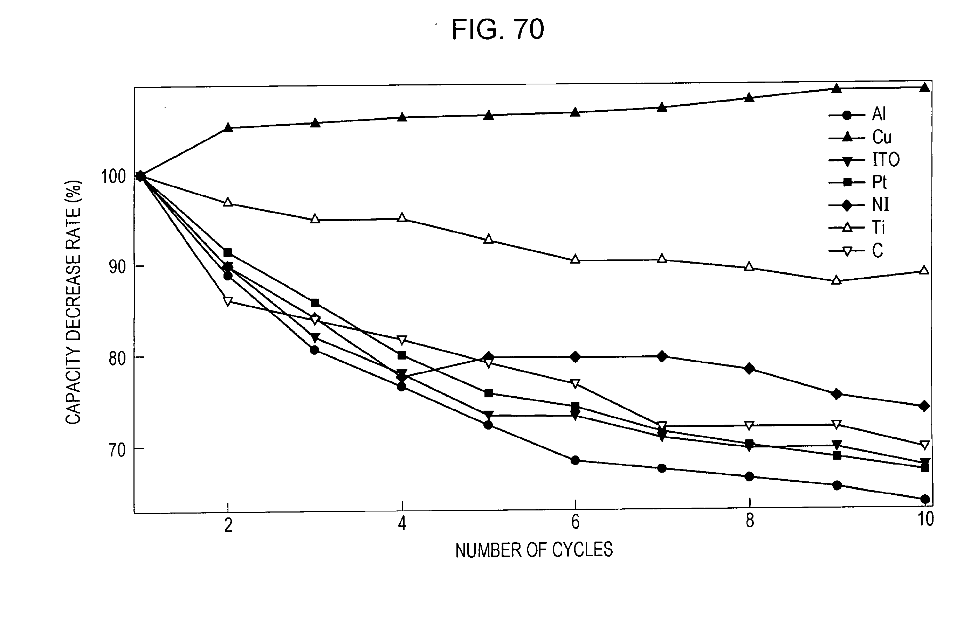

In addition, the graph obtained by plotting the discharge capacity retention rate to the first discharge capacity with respect to the number of cycles is shown in Fig. 70.

As shown in Figs. 67 to 69, it was found that the discharge capacity was changed in accordance with the types of collector materials forming the upper collector layer 14 and the lower collector layer 12. In particular, it was found that when copper was used, the discharge capacity was high as compared with that of the other materials. Furthermore, it was found that when copper was used, the discharge capacity was increased as the number of cycles was increased.

Furthermore, as shown in Fig. 70, it was found that the discharge capacity retention rate was changed in accordance with the types of collector materials forming the collectors.

### [Test Examples 3-1 to 3-3] (other examples in which a test was performed using copper as a collector material)

### <Test Example 3-1> (an example in which a substrate 11 side was used as a negative electrode)

In Test Examples 2-1 to 2-7 described above, since excellent performances were obtained when copper was used as a collector material, a test in which copper was used as a collector material was further performed. That is, a laminate was formed in which thin films to be used as the lower collector layer 12 and the upper collector layer 14 were formed using copper as a target material under different sputtering conditions from those of Test Example 2-2, and tests similar to those of Test Example 2-1 were performed.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: Cu
Pressure: 0.5 Pa
Sputtering gas: Ar: 20 sccm
Output: 50 W
Film-formation time: 10 minutes
Film thickness: 150 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Output: 300 W
Film-formation time: 8 hours
Film thickness: 1,100 nm

### [Formation of upper collector layer 14]

Next, a thin film to be used as the upper collector layer 14 was formed on the substrate 11 using a sputtering apparatus under the following sputtering conditions.

### (Sputtering conditions)

Target: Cu
Pressure: 0.5 Pa
Sputtering gas: Ar: 20 sccm
Output: 50 W
Film-formation time: 10 minutes
Film thickness: 150 nm

The (charge and discharge test), the (open-circuit voltage), and the (impedance measurement) were performed using this laminate in a manner similar to that of Test Example 2-2.

The results of the charge and discharge test are shown in Figs. 7-1 and 7-2. The result of the open-circuit voltage measurement is shown in Fig. 7-3. The Cole-Cole plots of the results of the impedance measurement are shown in Figs. 7-4 and 7-5. In addition, Fig. 7-5 is an enlarged graph of that shown in Fig. 7-4.

### (Evaluation)

From Test Example 3-1, it was confirmed that the laminate as shown in Fig. 1A was able to repeatedly perform charge and discharge operation. In addition, according to the impedance measurement, the behavior before the charge and discharge test was different from that thereafter, and it was confirmed that the state of the interlayer 13 was changed before and after the charge and discharge test.

### [Test Examples 3-2 and 3-3] (examples in which a voltage condition of the charge and discharge test was changed)

### <Test Example 3-2> (an example in which a substrate 11 side was used as a positive electrode)

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: Cu
Pressure: 0.5 Pa
Sputtering gas: Ar: 20 sccm
Ten outputs: 50 W
Film-formation time: 15 minutes
Film thickness: 200 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Output: 300 W
Film-formation time: 8 hours
Film thickness: 1,100 nm

### [Formation of upper collector layer 14]

Next, a thin film to be used as the upper collector layer 14 was formed on the substrate 11 using a sputtering apparatus under the following sputtering conditions.

### (Sputtering conditions)

Target: Cu
Pressure: 0.5 Pa
Sputtering gas: Ar: 20 sccm
Output: 50 W
Film-formation time: 15 minutes
Film thickness: 200 nm

The following charge and discharge test was performed using this laminate.

### (Charge and discharge test)

After a + terminal of a power supply was connected to the lower collector layer 12, and a - terminal of the power supply was connected to the upper collector layer 14, a charge and discharge test (number of cycles: 10) was performed at a constant current in such a way that a cut-off voltage of charge was set to 4.5 V, and a cut-off voltage of discharge was set to 1.0 V. In addition, the electric current at the time of charge and discharge was set to 0.5 µA, and the effective area was set to 1 cm × 1 cm (1 cm²). The measurement results are shown in Fig. 7-6.

### <Test Example 3-3> (an example in which a substrate 11 side was used as a negative electrode)

A laminate having the structure of the substrate 11/lower collector layer 12/interlayer 13/upper collector layer 14 as shown in Fig. 1A was formed as described below.

### [Formation of lower collector layer 12]

First, a thin film to be used as the lower collector layer 12 was formed on the substrate 11 (glass substrate) using a sputtering apparatus under the following sputtering conditions.

### (Sputtering conditions)

Target: Cu
Pressure: 0.5 Pa
Sputtering gas: Ar: 20 sccm
Output: 50 W
Film-formation time: 15 minutes
Film thickness: 200 nm

### [Formation of interlayer 13]

Next, a thin film to be used as the interlayer 13 was formed on the lower collector layer 12 using a sputtering apparatus under the following sputtering conditions.

### (Sputtering conditions)

Target: Li₃PO₄
Pressure: 0.5 Pa
Sputtering gas: Ar: N₂=30 sccm: 30 sccm
Output: 300 W
Film-formation time: 8 hours
Film thickness: 1,100 nm

### [Formation of upper collector layer 14]

Next, a thin film to be used as the upper collector layer 14 was formed on the substrate 11 using a sputtering apparatus under the following sputtering conditions.

### (Sputtering conditions)

Target: Cu
Pressure: 0.5 Pa
Sputtering gas: Ar: 20 sccm
Output: 50 W
Film-formation time: 15 minutes
Film thickness: 200 nm

The following charge and discharge test was performed using this laminate.

### (Charge and discharge test)

After a + terminal of a power supply was connected to the upper collector layer 14, and a - terminal of the power supply was connected to the lower collector layer 12, a charge and discharge test (number of cycles: 10) was performed at a constant current in such a way that a cut-off voltage of charge was set to 4.5 V, and a cut-off voltage of discharge was set to 1.0 V. In addition, the electric current at the time of charge and discharge was set to 0.5 µA, and the effective area was set to 1 cm × 1 cm (1 cm²). The measurement results are shown in Fig. 7-7.

### (Evaluation)

From Test Examples 3-2 and 3-3, it was confirmed that the laminate as shown in Fig. 1A was able to repeatedly perform charge and discharge operation.

### 4. Other Embodiments

The present invention is not limited to the above embodiments, and various modifications and applications may be made without departing from the scope of the present invention.

For example, although the solid electrolyte battery is formed by the step of applying a voltage following the laminate formation step in the first and the second embodiments, the step of applying a voltage may be omitted. That is, for example, when the interlayer 13 of the above laminate is formed by a sputtering method, at the stage at which the laminate is formed, electric potential difference is generated therein even before the step of applying a voltage to the laminate is performed, and hence the laminate functions as a solid electrolyte battery. Accordingly, when the interlayer 13 is formed by a sputtering method, the step of applying a voltage may be omitted.

Although Li₃PO₄ and LiPON are mentioned as a lithium ion conductive material which forms the interlayer 13 or the interlayer 43 in the first to the third embodiments, the lithium ion conductive material which forms the interlayer is not limited thereto.

As the lithium ion conductive material which forms the interlayer 13 or the interlayer 43, for example, an inorganic solid electrolyte having lithium ion conductivity, which was been proposed in the past, may be used. As the lithium ion conductive material described above, for example, a nitride, a halide, an oxygen acid salt, or a sulfide of Li, each having lithium ion conductivity, may be mentioned. For example, there may be mentioned NASICON type Li₁₊ₓMₓTi₂₋ₓ(PO₄)₃ (M is a hetero atom, such as Al or Sc), perovskite type La_{2/3-x}Li₃ₓTiO₃, LISICON type Li₄₋ₓGe₁₋ₓPₓS₄, β-Fe₂(SO₄) type Li₃M₂(PO₄)₃ (M is a hetero atom, such as In or Sc).

Although the lower collector layer 12 and the upper collector layer 14 are each formed of the thin film of the collector material in the first to the third embodiments, the lower collector layer 12 and the upper collector layer 14 may be each formed of a plate-shaped collector material.

In the third embodiment, for example, a voltage may be applied to the laminate by connecting the + terminal of the power supply 18 to the lower collector layer 12 and connecting the - terminal of the power supply 18 to the upper collector layer 14.

## Claims

1. A method for manufacturing a solid electrolyte battery comprising the steps of:
forming a laminate having a first collector layer of a first collector material, a second collector layer of a second collector material, and an interlayer of a lithium ion conductive material; and
applying a voltage to the laminate.

2. The method for manufacturing a solid electrolyte battery according to Claim 1,
wherein the first collector material and the second collector material each comprise Cu.

3. The method for manufacturing a solid electrolyte battery according to Claim 1,
wherein the interlayer is a thin film formed from the lithium ion conductive material.

4. The method for manufacturing a solid electrolyte battery according to Claim 3,
wherein the first collector layer is a thin film formed from the first collector material, and
the second collector layer is a thin film formed from the second collector material.

5. The method for manufacturing a solid electrolyte battery according to Claim 1,
wherein the first collector layer is a thin film formed from the first collector material,
the second collector layer is a thin film formed from the second collector material, and
the interlayer is a glass substrate formed from the lithium ion conductive material.

6. The method for manufacturing a solid electrolyte battery according to Claim 1,
wherein the lithium ion conductive material comprises a compound containing at least lithium and phosphorus as constituent elements.

7. The method for manufacturing a solid electrolyte battery according to Claim 6,
wherein the compound containing at least lithium and phosphorus as constituent elements comprises Li₃PO₄ or LiPON formed of Li₃PO₄ and nitrogen added thereto.

8. A method for manufacturing a solid electrolyte battery comprising the steps of:
forming a laminate having a substrate, a first collector layer of a first collector material formed on the substrate, an interlayer of a lithium ion conductive material formed on the first collector layer, and a second collector layer of a second collector material formed on the interlayer; and
applying a voltage to the laminate.

9. The method for manufacturing a solid electrolyte battery according to Claim 8,
wherein in the step of applying a voltage, the voltage is applied between the first collector layer as a low electrical potential side and the second collector layer as a high electrical potential side.

10. The method for manufacturing a solid electrolyte battery according to Claim 8,
wherein in the step of applying a voltage, the voltage is applied between the first collector layer as a high electrical potential side and the second collector layer as a low electrical potential side.

11. A solid electrolyte battery comprising:
a first collector layer of a first collector material;
a second collector layer of a second collector material; and
an interlayer of a lithium ion conductive material provided between the first collector layer and the second collector layer,
wherein the interlayer has a positive electrode region, a solid electrolyte region, and a negative electrode region, each of which is formed when the lithium ion conductive material is changed,
lithium ions move to the negative electrode region from the positive electrode region via the solid electrolyte region at the time of charge, and
lithium ions move to the positive electrode region from the negative electrode region via the solid electrolyte region at the time of discharge.

12. The solid electrolyte battery according to Claim 11, wherein the first collector material and the second collector material each comprise Cu.

13. The solid electrolyte battery according to Claim 11, wherein the lithium ion conductive material comprises a compound containing at least lithium and phosphorus as constituent elements.

14. The solid electrolyte battery according to Claim 13, wherein the compound containing at least lithium and phosphorus as constituent elements comprises Li₃PO₄ or LiPON formed of Li₃PO₄ and nitrogen added thereto.

15. A solid electrolyte battery comprising:
a substrate;
a first collector layer of a first collector material formed on the substrate;
an interlayer of a lithium ion conductive material formed on the first collector layer; and
a second collector layer of a second collector material formed on the interlayer,
wherein the interlayer has a positive electrode region, a solid electrolyte region, and a negative electrode region, each of which is formed when the lithium ion conductive material is changed,
lithium ions move to the negative electrode region from the positive electrode region via the solid electrolyte region at the time of charge, and
lithium ions move to the positive electrode region from the negative electrode region via the solid electrolyte region at the time of discharge.

16. The solid electrolyte battery according to Claim 15, wherein the positive electrode region is formed at the second collector layer side, and
the negative electrode region is formed at the first collector layer side.

17. The solid electrolyte battery according to Claim 15, wherein the positive electrode region is formed at the first collector layer side, and
the negative electrode region is formed at the second collector layer side.
